# EUROPEAN PATENT SPECIFICATION

(11) **EP 2 143 559 B1**
(45) Date of publication and mention of the grant of the patent: **11.06.2014**
(21) Application number: 08740395.2
(22) Date of filing: 14.04.2008
(51) Int. Cl.: B32B 15/092, B32B 9/00, C09J 163/00, C23F 1/22

(54) **MAGNESIUM ALLOY COMPOUND MATERIAL, AND ITS MANUFACTURING METHOD**
MAGNESIUMLEGIERUNGSVERBUNDMATERIAL UND HERSTELLUNGSVERFAHREN DAFÜR
MATÉRIAU COMPOSITE D'ALLIAGE DE MAGNÉSIUM ET SON PROCÉDÉ DE FABRICATION

(30) Priority: 13.04.2007 JP 2007106454
(43) Date of publication of application: 13.01.2010
(73) Proprietor: Taisei Plas Co., Ltd., Tokyo 103-0007 (JP)
(72) Inventor: NARITOMI, Masanori, Tokyo 103-0023 (JP); ANDO, Naoki, Tokyo 103-0023 (JP)
(74) Representative: Ter Meer Steinmeister & Partner
(86) International application number: PCT/JP2008/057309
(87) International publication number: WO 2008/133096

(56) References cited:
- WO-A1-2007/040245
- WO-A1-2007/040245
- JP-A- 09 314 744
- JP-A- 2002 120 002
- JP-A- 2003 246 849
- JP-A- 2004 195 493
- JP-A- 2004 216 609
- MASASHI SEKIGUCHI ET AL: "Effect of conversion coatings on bond strength of magnesium alloy adhesive joints", JOURNAL OF JAPAN INSTITUTE OF LIGHT METALS, vol. 56, no. 3, 1 January 2006 (2006-01-01), pages 156-161, XP55008496, ISSN: 0451-5994, DOI: 10.2464/jilm.56.156
- C. S. LIN ET AL: "Formation of Phosphate/Permanganate Conversion Coating on AZ31 Magnesium Alloy", JOURNAL OF THE ELECTROCHEMICAL SOCIETY, vol. 153, no. 3, 1 January 2006 (2006-01-01), page B90, XP55008460, ISSN: 0013-4651, DOI: 10.1149/1.2164787
- CORTES P ET AL: "The fracture properties of a fibre-metal laminate based on magnesium alloy", COMPOSITES PART B: ENGINEERING, ELSEVIER, UK, vol. 37, no. 2-3, 1 April 2005 (2005-04-01), pages 163-170, XP025368911, ISSN: 1359-8368, DOI: 10.1016/J.COMPOSITESB.2005.06.002 [retrieved on 2005-04-01]

## Description

### TECHNICAL FIELD

The present invention relates to a composite of, for instance, a magnesium alloy and a magnesium alloy, a magnesium alloy and another metal alloy, or a magnesium alloy and a fiber-reinforced plastic, as used in industrial machinery such as transport equipment, electric equipment, medical equipment or general machinery, as well as in consumer appliances. The invention relates also to a method for manufacturing such a composite. More specifically, the present invention relates to a magnesium alloy composite and to a method for manufacturing the same, the magnesium alloy composite resulting from integrally bonding an optimal magnesium alloy part and a fiber-reinforced plastic such as carbon fiber-reinforced plastic, in components or structures that make up, for instance, transport equipment where lightweight is required, such as automotive components, aircraft components, and bicycle components.

### BACKGROUND ART

The use of permanganate solutions to produce conversion coatings on magnes-ium alloy substrates and the subsequent application of an expoxy adhesive is disclosed, for example, in "Effect of conversion coatings on bond strength of magnesium alloy adhesive joints" by Masashi Sekiguchi et al., Journal of Japan Institute of light metals, vol. 56, no. 3, 1 January 2006, pages 156 to 161, in "Formation of Phosphate/Permanganate Conversion Coating on AZ31 Magnesium Alloy" by C.S. Lin et al., journal of the electrochemical society, vol. 153, no. 3, 1 January 2006, page 890, in "The fracture properties of a fibre-metal laminate based on magnesium alloy" by Cortes P. et al., published in Composites part B: Engineering, Elsevier, UK, vol. 37, no. 2-3, 1 April 2005, pages 163 to 170, and in WO2007/040245 A1. Technologies for integrating metals with metals, and metals with resins by resorting to some bonding means are required in components in a wide variety of industrial fields such as automobiles, domestic appliances, industrial machinery or the like. Numerous adhesives have been developed to meet these requirements. Various excellent adhesives are known among these adhesives. For instance, adhesives that bring out their functionality at normal temperature, or upon heating, are used to integrally bond a metal and a synthetic resin. This method constitutes a standard bonding technique used at present.

Meanwhile, other bonding technologies that do not rely on adhesives have also been developed. Examples of such technologies include, for instance, methods for integrating light metals, such as magnesium, aluminum or alloys thereof, or ferrous alloys such as stainless steel, with high-strength engineering resins, without any intervening adhesive. Manufacturing technologies that have been developed and proposed include, for instance, methods that involve bonding a metal with a thermoplastic resin (hereafter, "injection bonding"), wherein a polybutylene terephthalate resin (hereafter, "PBT"), or a polyphenylene sulfide resin (hereafter, "PPS"), being crystalline thermoplastic resins, is injected and bonded with an aluminum alloy (for instance, Patent documents 1 and 2). In addition, the possibility of using these resins systems in injection bonding of magnesium alloys, copper alloys, titanium alloys and stainless steel has recently been demonstrated and proposed (Patent documents 3, 4, 5 and 6).

These inventions, all of which stem from the same inventors, derive from a simple bonding theory, namely an "NMT" theoretical hypothesis relating to injection bonding of aluminum alloys, and a "new NMT" theoretical hypothesis relating to injection bonding of all metal alloys. The theoretical hypothesis "new NMT", having a wider reach, and advanced by one of the inventors (Naoki Ando), posits the following. Injection bonding for bringing out a strong bonding strength requires that both the metal and the injection resin meet several conditions. Among these, the metal must meet the three conditions below. In condition (1), the chemically etched metal alloy has preferably a rough surface (surface roughness) exhibiting a period of 1 to 10 µm (spacing between peaks or spacing between valleys) such that the peak-valley height difference is about half the spacing, i.e. about 0.5 to 5 µm.

Such roughness cannot be totally achieved in practice through chemical reactions. Condition (1) is deemed to be satisfied when surface roughness, as measured using a surface roughness analyzer, yields a roughness curve with a maximum height difference (roughness) ranging from 0.2 to 5 µm for textures of irregular period ranging from 0.2 to 20 µm, or when a mean width of profile elements (RSm) ranges from 0.8 to 10 µm and a maximum height of profile (Rz) ranges from 0.2 to 5 µm in accordance with JIS Standards (JIS B 0601:2001(ISO 4287)), based on scanning analysis using a scanning probe microscope.

The inventors refer to a roughness thus defined as "surface of micron-scale roughness". As condition (2), the above large irregular surface, strictly speaking the inner wall face of the recesses thereof, has a fine irregular surface of a period not smaller than 10 nm, preferably a period of about 50 nm. As the last condition (3), the surface that constitutes the above fine irregular surface is a ceramic substance, specifically a metal oxide layer thicker than a native oxide layer, or a deliberately created metal phosphate layer. This hard-substance layer, moreover, is preferably a thin layer having a thickness ranging from several nm to several tens of nm. As regards the resin conditions, suitable resins that can be used are hard crystalline resins having a slower crystallization rate upon rapid cooling, for instance through compounding with other polymers that are appropriate for the resin. In practice there can be used resin compositions in which PBT, PPS or the like is compounded with other appropriate polymers, as well as with glass fibers and the like.

These resins can be injection-bonded using ordinary injection molding machines and injection molding molds. The injection bonding process is explained next according to the "new NMT" hypothesis of the inventors. The injected molten resin is led into an injection molding mold at a temperature lower than the melting point of the resin by about 150°C. The molten resin is found to cool within flow channels, such as sprues, runners and the like, down to a temperature lower than the melting point. It will be appreciated that no immediate phase change to solid occurs in zero time, through crystallization, when the molten crystalline resin is cooled rapidly, even at or below the melting point of the molten resin. In effect, the molten resin persists in a molten, supercooled state for a very short time also at or below the melting point. The duration of this supercooling appears to have been successfully prolonged somewhat in PBT and PPS through some special compounding, as described above. This feature can be exploited to cause the molten resin to penetrate into large, micron-scale recesses on the surface of the metal, before the abrupt rise in viscosity that accompanies the generation of large amounts of micro-crystals. After having penetrated into the recesses, the molten resin goes on cooling, whereby the number of micro-crystals increases dramatically, causing viscosity to rise abruptly. The size and shape of the recesses determine whether the molten resin can penetrate or not all the way into the recesses.

Experimental results have revealed that, irrespective of the type of metal, the molten resin can penetrate all the way into recesses having a diameter not smaller than 1 µm and having a depth of 0.5 to 5 µm. When the inner wall faces of the recesses have also a rough surface, as evidenced in the above-described microscopic observations (electron micrographs), the resin penetrates partly also into the crevices of these ultra fine irregularities. As a result, the resin catches onto the irregularities and is difficult to pull away when a pulling force acts from the resin side. Such a rough surface affords an effective spike-like catching when the surface is that of a high-hardness metal oxide. If the period of the irregularities is 10 µm or greater, the bonding force weakens for the evident reasons below. In the case of dimple-like recess aggregates, for instance, the number of dimples per surface area decreases as the diameter of the recesses becomes larger. The larger the recesses are, the weaker the catching effect of the above-mentioned spikes. Although bonding per se is a question of the resin component and the surface of the metal alloy, adding reinforcing fibers or an inorganic filler to the resin composition allows bringing the coefficient of linear expansion of the resin as a whole closer to that of the metal alloy. This allows preserving easily the bonding strength after bonding.

Composites obtained through injection bonding of a crystalline resin such as a PBT or PPS resin with a magnesium alloy, copper alloy, titanium alloy, stainless steel or the like, in accordance with the above hypothesis, are strong integrated products, having a shear fracture strength of 200 to 300 kgf/cm² (about 20 to 30 N/ mm²=20 to 30 MPa). The present inventors believe the "New NMT" theory to be true as borne out in injection bonding of numerous metal alloys. The advocated hypothesis, which is based on inferences relating to fundamental aspects of polymer physical chemistry, must however be vetted by many chemists and scientists. For instance, although we have inferred the behavior of the molten crystalline resin upon rapid cooling, this aspect has not been debated yet from the standpoint of polymer physics. Thus, although the inventors believe their inferences to be correct, the latter have not been proved true outright, since high-rate reactions at high temperature and under high pressure cannot be observed directly. The hypothesis, moreover, postulates a purely physical anchor effect underlying bonding, which deviates somewhat from conventional knowledge. Most monographs and the like concerned with adhesion and authored by specialists ordinarily ascribe chemical factors to the causes underlying adhesive forces.

Owing to the experimental difficulties involved, the inventors gave up on validating their hypothesis through direct experimentation, and decided on a reverse approach. Specifically, the inventors assumed that the "new NMT" theoretical hypothesis can be applied also to adhesive bonding, and set out to study whether high-performance adhesive phenomena can be proved by a similar theory. That is, the inventors decided to ascertain whether non-conventional bonded systems can be discovered based only on the surface state of adherend materials, and by using commercially available general-purpose epoxy adhesives.

Remarkable developments have been achieved in bonding of dissimilar materials by way of adhesives. In particular, high-technology adhesives are being used in the assembly of structural parts in aircraft. In these technologies, bonding is accomplished using high-performance adhesives, following a surface treatment in which a metal alloy is imparted corrosion resistance and microscopic texture. On closer inspection, however, metal surface treatment methods such as phosphoric acid treatment, chromate treatment and anodization rely still on staple treatment methods developed 40 or more years ago, and it seems as though no new developments have come along in recent years. As regards the development of adhesives themselves, mass production of instant adhesives took off several decades ago, but as far as the inventors know, no new breakthroughs have been achieved since the landmark introduction of second-generation acrylic adhesives. From the viewpoint of adhesion theory as well, and although the inventors may not be aware of the very latest academic trends, the chemical and physical explanations jointly proffered in the commercially available monographs and the like appear to us lacking in clarity and also in ideas that may lead to further developments.

Fortunately, it is possible to use nowadays, freely and inexpensively, electron microscopes having resolutions of several nm. The inventors have discussed their proposed "NMT" and "new NMT" hypotheses relating to injection bonding on the basis of observations of such high-resolution micrographs. As a result of the observations, the inventors eventually proposed the above-mentioned hypothesis, thoroughly based on anchor effects. Therefore, we expected novel phenomena to be observed as a result of working on adhesion theory, in terms of adhesive bonding, by emphasizing physical aspects. Magnesium alloys have a specific weight of about 1.7, and are the lightest among metals in practical use. The inventors had already used injection bonding (Patent document 3) to produce prototypes of casings for mobile phones using an AZ91B magnesium alloy plate material and a PPS resin. The inventors wondered whether it would be possible to manufacture casings, chassis and other parts for ultra-light mobile devices not by injection bonding but by using adhesives.

In particular, carbon fiber reinforced plastics (hereafter, "CFRP") have the highest strength among structural materials, including metals, and are lightweight, having a specific weight of 1.6 to 1.7, i.e. a specific weight comparable to that of magnesium alloys. Ultra-lightweight and high-strength structural members could be manufactured if both CFRP and magnesium alloys could be strongly bonded to each other. Fortunately, CFRP prepregs, which are the precursors of CFRPs, are fabrics or aggregates of carbon fibers impregnated with an uncured epoxy resin, and thus integration simultaneous with curing can be made simple by tweaking the affinity of CFRP prepregs and an epoxy adhesive coated on the metal. In order to achieve the above goal, therefore, we felt that first of all it was necessary to conduct diligent research and development on how to improve and stabilize bonding forces (bonding strength) between magnesium alloys and epoxy adhesives. Thus, we endeavored to develop a method that affords strong bonding with fiber-reinforced plastics (hereafter, "FRPs"), in particular CFRPs, by focusing on the development of surface treatment techniques for magnesium alloys.

Patent document 1: WO 03/064150 A1
Patent document 2: WO 2004/041532 A1
Patent document 3: PCT/JP 2007/073526
Patent document 4: PCT/JP 2007/070205
Patent document 5: PCT/JP 2007/074749
Patent document 6: PCT/JP 2007/075287

### DISCLOSURE OF THE INVENTION

To achieve the above goal, the present invention encompasses the aspects below.

A magnesium alloy composite of Invention 1 comprises
a first metal part which is made of a magnesium alloy and has micron-scale roughness produced by chemical etching, and the surface of which is covered with, under electron microscopy, ultra-fine irregularities comprising innumerable tangled rod-shaped bodies having a diameter of 5 to 20 nm and a length of 20 to 200 nm, the surface being a thin layer of a manganese oxide; and
another adherend that is bonded using, as an adhesive, an epoxy adhesive that penetrates into the ultra-fine irregularities.

A magnesium alloy composite of Invention 2 comprises
a first metal part which is made of a magnesium alloy and has micron-scale roughness produced by chemical etching, and the surface of which is covered with, under electron microscopy, ultra-fine irregularities comprising irregular stacks of spherical bodies which have a diameter of 80 to 120 nm and from which innumerable rod-shaped protrusions having a diameter of 5 to 20 nm and a length of 10 to 30 nm grow, or comprising irregularities which have a period of 80 to 120 nm and from which the innumerable rod-shaped protrusions grow, the surface being a thin layer of a manganese oxide; and
another adherend that is bonded using, as an adhesive, an epoxy adhesive that penetrates into the ultra-fine irregularities.

A magnesium alloy composite of Invention 3 comprises
a first metal part which is made of a magnesium alloy and has micron-scale roughness produced by chemical etching, and substantially the entire surface of which is covered with, under electron microscopy, ultra-fine irregularities in the form of an uneven ground of a lava plateau in which granules or irregular polyhedral bodies having a diameter of 20 to 40 nm are stacked, the surface being a thin layer of a manganese oxide; and
another adherend that is bonded using, as an adhesive, an epoxy adhesive that penetrates into the ultra-fine irregularities.

A magnesium alloy composite of Invention 4 is any of Inventions 1 to 3,
wherein the adherend is a second metal part made of a magnesium alloy having the ultra-fine irregularities formed thereon.

A magnesium alloy composite of Invention 5 is any of Inventions 1 to 3,
wherein the adherend is a fiber-reinforced plastic, comprising the epoxy adhesive, and reinforced through filling and laminating of one or more types selected from among long fibers, short fibers and fiber cloth.

A magnesium alloy composite of Invention 6 is any of Inventions 1 to 5,
wherein the micron-scale surface roughness has an average length (RSm) of 0.8 to 10 µm and a maximum height roughness (Rz) of 0.2 to 5 µm.

A magnesium alloy composite of Invention 7 is any of Inventions 1 to 6,
wherein the chemical etching involves immersion in an acidic aqueous solution, and a last surface treatment is an immersion treatment in an aqueous solution of a permanganate salt.

A magnesium alloy composite of Invention 8 is any of Inventions 1 to 7,
wherein a resin of a cured product of the epoxy adhesive contains no more than 30 parts by weight of an elastomer component relative to a total 100 parts by weight of resin fraction.

A magnesium alloy composite of Invention 9 is any of Inventions 1 to 7,
wherein a cured product of the epoxy adhesive contains a total of no more than 100 parts by weight of a filler relative to a total 100 parts by weight of resin fraction.

A magnesium alloy composite of Invention 10 is Invention 9,
wherein the filler is one or more types of reinforcing fiber selected from among glass fibers, carbon fibers and aramid fibers, or one or more types of a powder filler selected from among calcium carbonate, magnesium carbonate, silica, talc, clay and glass.

A magnesium alloy composite of Invention 11 is Invention 8,
wherein the elastomer component has a particle size of 1 to 15 µm, and is one or more types selected from among vulcanized rubber powder, semi-crosslinked rubber, unvulcanized rubber, a terminal-modified thermoplastic resin of a hydroxyl group-terminated polyether sulfone having a melting point/softening point not lower than 300°C, and a polyolefin resin.

A method for manufacturing a magnesium alloy composite of Invention 1 comprises
a machining step of mechanically shaping a magnesium alloy part from a casting or an intermediate material; a chemical etching step of immersing the shaped magnesium alloy part in an acidic aqueous solution;
a conversion treatment step of immersing the magnesium alloy part in an aqueous solution comprising a permanganate salt;
a coating step of coating an epoxy adhesive on required portions of the magnesium alloy part;
a forming step of forming a prepreg material of fiber-reinforced plastic to the required size;
an affixing step of affixing the prepreg material to the coated surface of the magnesium alloy part; and
a curing step of curing the entire epoxy resin fraction by positioning, fixing and heating the prepreg material and the magnesium alloy part.

A method for manufacturing a magnesium alloy composite of Invention 2 comprises
a machining step of mechanically shaping a magnesium alloy part from a casting or an intermediate material;
a chemical etching step of immersing the shaped magnesium alloy part in an acidic aqueous solution;
a conversion treatment step of immersing the magnesium alloy part in an aqueous solution comprising a permanganate salt, to thereby form ultra-fine irregularities on the surface;
a coating step of coating an epoxy adhesive on the ultra-fine irregularities of the magnesium alloy part; a curing pre-treatment step of placing the magnesium alloy part, having been coated with the epoxy adhesive, in an airtight vessel, depressurizing the vessel, and then pressurizing the vessel to thereby push the epoxy adhesive into the ultra-fine irregularities of the magnesium alloy:
a forming step of forming a prepreg material of fiber-reinforced plastic to the required size;
an affixing step of affixing the prepreg material to the coated surface of the magnesium alloy part; and
a curing step of curing the entire epoxy resin fraction by positioning, fixing and heating the prepreg material and the magnesium alloy part.

A method for manufacturing a magnesium alloy composite of Invention 3 is the method for manufacturing a magnesium alloy composite of Invention 1 or 2,
wherein the micron-scale surface roughness has an average length (RSm) of 0.8 to 10 µm and a maximum height roughness (Rz) of 0.2 to 5 µm.

A method for manufacturing a magnesium alloy composite of Invention 4 is the method for manufacturing a magnesium alloy composite of Inventions 1 to 3,
wherein the conversion treatment step involves immersion in an weakly acidic aqueous solution of potassium permanganate.

A method for manufacturing a magnesium alloy composite of Invention 5 is the method for manufacturing a magnesium alloy composite of Inventions 1 to 4,
wherein a resin fraction of a cured product of the epoxy adhesive contains no more than 30 parts by weight of an elastomer component relative to a total 100 parts by weight of resin fraction.

A method for manufacturing a magnesium alloy composite of Invention 6 is the method for manufacturing a magnesium alloy composite of Inventions 1 to 5,
wherein the cured product contains a total of no more than 100 parts by weight of a filler relative to a total 100 parts by weight of resin fraction.

A method for manufacturing a magnesium alloy composite of Invention 7 is the method for manufacturing a magnesium alloy composite of Invention 6,
wherein the filler is one or more types of reinforcing fiber selected from among glass fibers, carbon fibers and aramid fibers, or one or more types of a powder filler selected from among calcium carbonate, magnesium carbonate, silica, talc, clay and glass.

A method for manufacturing a magnesium alloy composite of Invention 8 is the method for manufacturing a magnesium alloy composite of Inventions 5 to 7,
wherein the elastomer component has a particle size of 1 to 15 µm, and is one or more types selected from among vulcanized rubber powder, semi-crosslinked rubber, unvulcanized rubber, a terminal-modified thermoplastic resin of a hydroxyl group-terminated polyether sulfone having a melting point/softening point not lower than 300°C, and a polyolefin resin.

The elements that constitute the present invention are explained in detail below.

### [Magnesium alloy part]

The magnesium alloy used in the present invention is, for instance, a wrought aluminum alloy AZ31B or the like, or a casting magnesium alloy such as AZ91D or the like, according to the International Organization for Standardization (ISO), Japanese Industrial Standards (JIS) or the American Society for Testing and Materials (ASTM). In the case of a casting magnesium alloy there can be used a product formed using a sand mold, a metal mold, a die cast or the like, or a shaped part or structure obtained through machining of a cast product, for instance by cutting, grinding or the like. In the case of wrought magnesium alloys there can be used intermediate materials in the form of plate materials or the like, or shaped products and structures of the foregoing obtained through plastic working such as hot pressing or the like.

### [Surface treatment/chemical etching of the magnesium alloy part]

Preferably, the magnesium alloy part is immersed first in a degreasing bath to remove thereby oils and grease that become adhered during machining. Specifically, there is preferably prepared an aqueous solution through addition of a commercially available degreasing agent for magnesium alloys, to warm water, to a concentration as indicated by the manufacturer of the chemical. After immersion in this aqueous solution, the magnesium alloy part is rinsed with water. Ordinarily, the magnesium alloy part is dipped for 5 to 10 minutes in an aqueous solution of commercially available degreasing agent at a concentration of 5 to 10% and a temperature of 50 to 80°C. Next, chemical etching of the magnesium alloy is carried out through immersion in an acidic aqueous solution for a short time, followed by water rinsing. The magnesium alloy surface layer containing dirt that was not removed during the degreasing step is removed by chemical etching. At the same time, chemical etching gives rise to micron-scale roughness, specifically, a good texture having a roughness-curve average length (RSm) from 1 to 10 µm and a roughness-curve maximum height roughness (Rz) from 0.2 to 5 µm according to JIS Standards (JIS B 0601:2001(ISO 4287)), based on scanning analysis using a scanning probe microscope, or, in a measurement method using a conventional profilometer without computer calculations, a roughness curve having an irregular period ranging from 0.5 to 20 µm, and a height difference ranging from 0.2 to 5 µm.

The solution used for the above chemical etching is preferably an aqueous solution of a carboxylic acid or a mineral acid at a concentration of 1% to several %, in particular an aqueous solution of citric acid, malonic acid, acetic acid, nitric acid or the like. The aluminum and zinc ordinarily comprised in magnesium alloys do not dissolve during etching, but remain bonded to the surface of the magnesium alloy in the form of black smut. Therefore, the magnesium alloy is preferably dipped next in a weakly basic aqueous solution to dissolve aluminum smut, and thereafter in a strongly basic aqueous solution to dissolve and remove zinc smut. This concludes the pre-treatment.

### [Surface treatment/fine surface treatment of the magnesium alloy part]

The magnesium alloy part after completion of the above-described pre-treatment is then subjected to a so-called conversion treatment. Magnesium is a metal having a very high ionization tendency, and hence oxidizes faster than other metals when exposed to oxygen and moisture in air. Although magnesium alloys have a native oxide film, the latter is not sufficiently strong in terms of corrosion resistance, and water molecules and oxygen diffusing through the native oxide film give rise to oxidative corrosion of the magnesium alloy, also under ordinary environments. Therefore, ordinary magnesium alloy parts are subjected to a corrosion-preventing treatment by being covered entirely with a thin layer of chromium oxide, through immersion in an aqueous solution of chromic acid, potassium dichromate or the like (so-called chromate treatment), or with a manganese phosphate compound through immersion in an aqueous solution of a manganese salt containing phosphoric acid. These treatments are called conversion treatments in the magnesium business.

Briefly, conversion treatments of magnesium alloys involve covering the surface of the latter with a thin layer of a metal oxide and/or a metal phosphate by immersing the magnesium alloy in an aqueous solution containing a metal salt. Chromate conversion treatments using hexavalent chromium are avoided nowadays, owing to environment pollution concerns. Conversion treatments involve thus treatments employing metal salts other than chromium, i.e. so-called non-chromate treatments, such as the above-described manganese phosphate conversion treatments or silicon-based conversion treatments. Unlike in the above methods, the present invention employs preferably a weakly acidic aqueous solution of potassium permanganate as the aqueous solution in the conversion treatment. The surface coat (conversion coat) formed thereby comprises manganese dioxide.

A specific preferred treatment method involves immersing the already-pretreated magnesium alloy part in a very dilute acidic aqueous solution for a short time, followed by water rinsing. Residual sodium ions that were not washed away during the pre-treatment are neutralized and removed thereby. The magnesium alloy part is then immersed in the aqueous solution of the conversion treatment, followed by water rinsing. The dilute acidic aqueous solution used is preferably a 0.1 to 0.3% aqueous solution of citric acid or malonic acid. Immersion takes place preferably around normal temperature for about 1 minute. The aqueous solution used for the conversion treatment is preferably an aqueous solution containing 1.5 to 3% of potassium permanganate, about 1% of acetic acid and about 0.5% of sodium acetate, at a temperature of 40 to 50°C. Immersion in this aqueous solution lasts preferably about 1 minute. As a result of the above operation, the magnesium alloy becomes covered with a conversion coat of manganese dioxide. The surface morphology of the skin exhibits micron-scale roughness (surface roughness), and also nano-scale ultrafine irregularities when observed by electron microscopy.

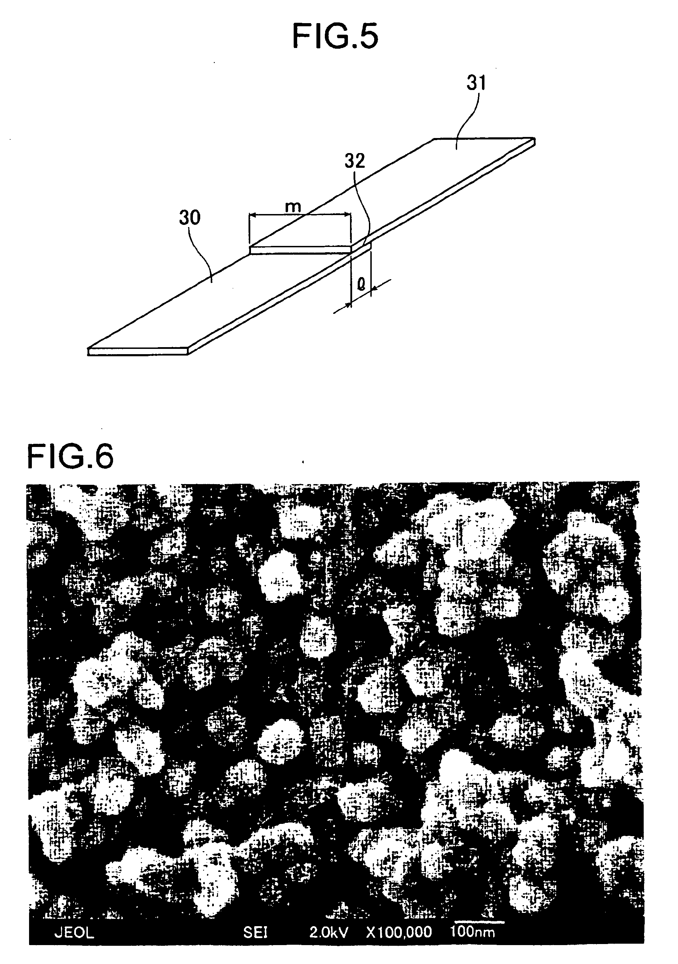

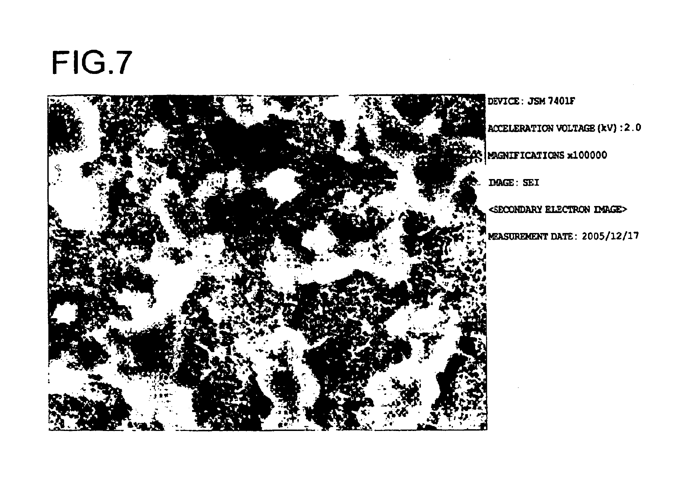

Figs. 6 and 7 are 100,000-magnification electron micrographs of such nano-scale ultra-fine irregularities. The surface morphology of the ultra-fine irregularities is difficult to describe in a straightforward manner. The surface shown in the electron micrograph of Fig. 7 can be approximately described as being covered with innumerable tangled rod-shaped or spherical ultra-fine irregularities having a diameter of 5 to 20 nm and a length of 20 to 200 nm. Meanwhile, the ultra-fine irregularities on the surface in the electron micrograph of Fig. 6 look like irregular stacks of spherical bodies which have a diameter of 80 to 120 nm, and from which there grow innumerable rod-shaped or spherical protrusions having a diameter of 5 to 20 nm and a length of 10 to 30 nm. As far as can be observed by electron microscopy, all the rod-like (needle) shapes having a diameter of about 10 nm appear to be crystals, although no diffraction lines for manganese oxide were observed using an X-diffractometer (XRD).

Crystals cannot be detected by X-ray diffractometry (XRD) when the crystal amount is small, and thus the inventors, who are no crystallographers, cannot decide as yet whether these shapes may be termed crystals in the academic sense. The shapes at least are too regular to be amorphous (non-crystalline) and thus, in the opinion of the inventors, the shapes cannot be referred to as amorphous. XPS analysis reveals large peaks for manganese (ionic, not zero-valent manganese) and oxygen. The surface comprises undoubtedly a manganese oxide. The hue of the surface is dark, indicative of a manganese oxide having manganese dioxide as a main component.

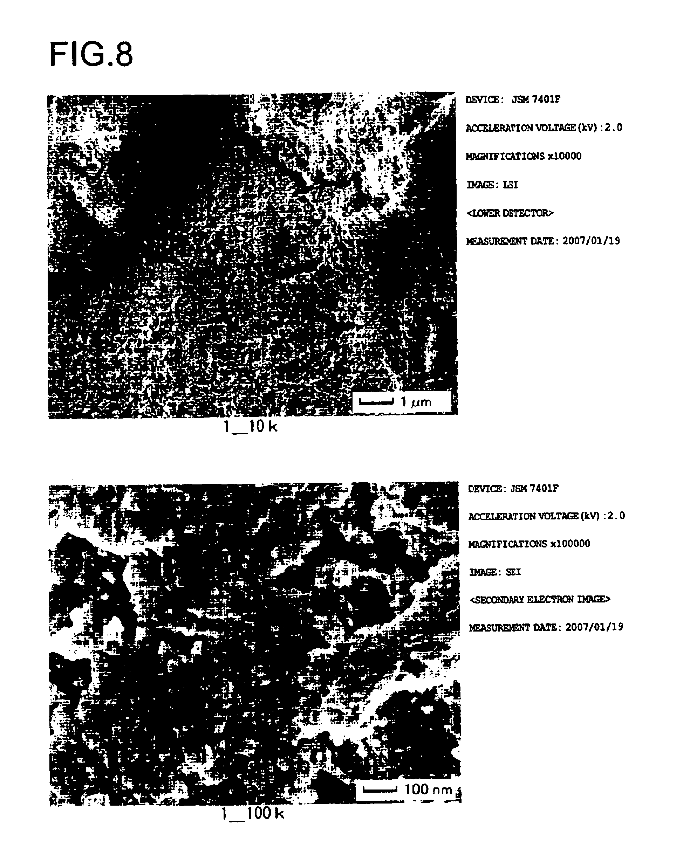

The fine surface morphology is completely different from the above-described one. Herein, substantially the entire surface is covered with ultra-fine irregularities having a shape in which granules or irregular polyhedral bodies having a diameter of 20 to 40 nm are stacked, resembling the uneven ground such as is found on the slopes of a lava plateau. Such shapes resembling the surface of a lava plateau, and whose composition may have a high aluminum content, are often found where the rod-like bodies of a diameter of 5 to 20 nm are not observed. Fig. 8 illustrates a micrograph of an example of such a surface, corresponding to a treatment example of AZ91D, which is a casting magnesium alloy.

### [Epoxy resin (adhesive) and application thereof]

The epoxy adhesive used in the present invention is not a special epoxy adhesive, and thus excellent commercially available epoxy adhesives can be used in the invention. Likewise, starting materials can be easily procured to produce an epoxy adhesive from scratch. Commercially available epoxy resins include, for instance, bisphenol epoxy resins, glycidylamine epoxy resins, polyfunctional polyphenol-type epoxy resins, alicyclic epoxy resins and the like. Any of these can be used as the material employed in the present invention. These epoxy resins may also be used joined to each other through reaction with a polyfunctional third component, for instance a polyfunctional oligomer having a plurality of hydroxyl groups. In the present invention, the epoxy adhesive is preferably obtained by mixing an epoxy resin with a polyfunctional amine compound added as a curing agent to the epoxy resin.

### [Elastomer component, filler component etc.]

The elastomer component and the filler component are preferably added to the above component since they bring the coefficient of linear expansion of the latter to a numerical value that is comparable to that of the aluminum alloy and/or the CFRP material. Thus, the elastomer component and the filler component can act as shock-absorbing agents when thermal shock or mechanical stress acts on the composite. In terms of enhancing impact resistance and thermal shock resistance, the elastomer component is preferably mixed in an amount of ranging from 0 to 30 parts by weight (no more than 30 parts by weight) relative to a total 100 parts by weight of the resin fraction (epoxy resin component + curing agent component). An excess of elastomer component beyond 30 parts by weight results in a drop in bonding strength, and is hence undesirable. A vulcanized rubber powder having a particle size of 1 to 15 µm is an example of the elastomer component. Elastomer component particles having a size of several µm are too large to intrude into the ultrafine irregularities on the aluminum alloy during application of the adhesive. The particles remain thus in the adhesive layer and do not affect the anchor portions.

As a result, there is no drop in bonding strength, while resistance to thermal shocks is an added benefit. Although any type of vulcanized rubber can be used in the present invention, in practice it is difficult to pulverize rubber to particles of several µm, regardless of rubber type. The inventors looked into the matter but found that there is little research and development being carried out on methods for manufacturing microparticle-vulcanized rubber. The inventors adopted a method that involved mechanical crushing and sorting of rubber vulcanized products, rubber unvulcanized products, and thermoplastic resins having been cooled in liquid nitrogen. Unfortunately, the manufacturing efficiency and cost issues associated with this method negate the commercial feasibility of the method. Another approach involves using unvulcanized or semi-crosslinked rubber, and modified super engineering plastics or polyolefin resins. Examples of modified super engineering plastics include, for instance, a hydroxyl group-terminated polyether sulfone "PES100P (by Mitsui Chemicals, Tokyo, Japan)".

The polyolefin resin used is preferably an already-developed polyolefin resin that mixes readily with epoxy resins. The inventors expect the durability against thermal shock to be inferior in unvulcanized or semi-crosslinked rubber, and modified super engineering plastics or polyolefin resins, as compared with that of powder vulcanized rubbers, although this is not yet well understood, since the evaluation method itself has not been yet fully perfected by establishing the limiting values based on an experimental method by the inventors. In any case, including unvulcanized elastomers in the mixture elicits resistance against thermal shock. Examples of such polyolefin resins include, for instance, maleic anhydride-modified ethylene copolymers, glycidyl methacrylate-modified ethylene copolymers, glycidyl ether-modified ethylene copolymers, ethylene-alkyl acrylate copolymers and the like.

Examples of the maleic anhydride-modified ethylene copolymers that can be used include, for instance, maleic anhydride graft-modified ethylene copolymers, maleic anhydride-ethylene copolymers, ethylene-acrylate-maleic anhydride terpolymers and the like. Particularly preferred among the foregoing are ethylene-acrylate-maleic anhydride terpolymers, as these allow obtaining superior composites. Concrete examples of the ethylene-acrylate-maleic anhydride terpolymers include, for instance, "Bondine(trademark) by Arkema, (Paris, France)". As the glycidyl methacrylate-modified ethylene copolymers there can be used, for instance, glycidyl methacrylate graft-modified ethylene copolymers and glycidyl methacrylate-ethylene copolymers. Particularly preferred among the foregoing are glycidyl methacrylate-ethylene copolymers, as these allow obtaining superior composites. Specific examples of the glycidyl methacrylate-ethylene copolymers include, for instance, "Bond First(trademark) by Sumitomo Chemical (Tokyo, Japan)".

Examples of the glycidyl ether-modified ethylene copolymers that can be used include, for instance, glycidyl ether graft-modified ethylene copolymers and glycidyl ether-ethylene copolymers. Specific examples of the ethylene-alkyl acrylate copolymers include, for instance, "Lotryl(trademark) by Arkema". The filler is explained next. Preferably, there is used an epoxy adhesive composition further containing 0 to 100 parts by weight (no more than 100 parts by weight), more preferably 10 to 60 parts by weight, of a filler, relative to a total 100 parts by weight of resin fraction including the above-described elastomer component.

Examples of the filler that is used include, for instance, reinforcing fiber-based fillers such as carbon fibers, glass fibers, aramid fibers and the like; or a powder filler such as calcium carbonate, mica, glass flakes, glass balloons, magnesium carbonate, silica, talc, clay, as well as pulverized carbon fibers and aramid fibers. Adjustment of a specific epoxy adhesive is explained next. An adhesive composition (uncured epoxy adhesive) is obtained by thoroughly mixing an epoxy resin main material, a curing agent, an elastomer and a filler, and as the case may require, also a small amount of a solvent (commercially available ordinary solvent) for epoxy adhesives, depending on the desired viscosity. The adhesive composition is applied on required portions of a metal alloy part obtained in a previous process. The adhesive composition may be applied manually or using a coating machine.

### [Processing after application of the epoxy resin adhesive]

After application of the epoxy resin adhesive, the coated part is preferably placed in a vacuum vessel or a pressure vessel. The pressure in the vessel is reduced to near vacuum. After several minutes, air is infused to revert the vessel to normal pressure (atmospheric pressure). Alternatively, the coated part is placed thereafter in an environment under a pressure of several atmospheres to several tens of atmospheres. Preferably, a cycle of depressurization and pressurization is repeated. Air or gas in the interstices between the coating material and the metal alloy is evacuated as a result, which makes it easier for the coated epoxy resin adhesive to penetrate into ultrafine recesses. A method employing highpressure air in a pressure vessel entails high costs in terms of equipment and expenses for actual mass production. Therefore, carrying out one cycle, or several cycles of depressurization and return to normal pressure using a vacuum vessel should be more economical. In the case of the magnesium alloy of the present invention, sufficiently stable bonding strength can be achieved through several cycles of reduced pressure and return to normal pressure. After being removed from the vacuum vessel, the magnesium alloy composite is preferably left to stand for about 30 minutes or more in an environment at normal temperature or at a temperature of about 40°C. This allows evaporating a substantial part of solvent that may have been added to the epoxy adhesive composition.

### [FRP prepreg]

Various fiber-reinforced plastics (FRP) are known. Known FRP include, for instance, glass-fiber reinforced plastic (hereafter, "GFRP"), FRP using aramid fibers (hereafter, "AFRP"), FRP using boron fibers (hereafter "BFRP"), and CFRP using carbon fibers. The resin fraction used in the prepregs is an unsaturated polyester or an epoxy resin. In the present invention, the resin fraction is preferably an epoxy resin. Bonding between a magnesium alloy and a CFRP using an epoxy resin can be evidently generalized to bonding of magnesium alloys and FRP using epoxy resins.

The most lightweight and high-strength CFRP can be effectively used in the composite of the present invention as explained below. The CFRP prepreg used for manufacturing CFRP may be an ordinary commercially available CFRP prepreg as-is. Examples of the commercially available CFRP prepregs that can be used include, for instance, prepregs in which the above-described epoxy adhesive is impregnated into a carbon fiber cloth, or prepregs in which a provisional film comprising the uncured epoxy resin is formed and is then overlaid on the carbon fiber cloth. Also, CFRP prepreg can be easily produced from scratch by using a one-liquid epoxy adhesive and a carbon fiber cloth. The epoxy resin used is often a dicyandiamide-cured or amine-cured epoxy resin, in a B-stage (uncured state close to solid) at normal temperature. The epoxy resin melts then through a rise in temperature to hundred and several tens of degrees, after which the epoxy resin gels and becomes cured. Such being the case, the curing temperature characteristic of the epoxy adhesive coated on the magnesium alloy part preferably matches that of the uncured epoxy resin (adhesive) used in the CFRP prepreg. In experiments conducted by the inventors, strong bonding strength was achieved in the thermally cured prepregs even without particularly adjusting the curing temperature characteristics. Accordingly, further study into this aspect should result in yet better integrated products.

A prepreg portion is prepared through trimming to a required shape and stacking to a required form. When using a stack of a plurality of plies of unidirectional prepreg (prepreg comprising a web weaved with substantial warp but very little weft), the directionality of the strength in the ultimately obtained CFRP sheet material can be controlled by overlaying the fiber directions of the prepreg plies and/or by overlaying the plies at an angle. Such assembly requires therefore considerable know-how. The warp-weft counts are identical in articles obtained through weaving of carbon fibers. Equal strength in all directions is apparently found to be achieved by overlaying prepregs alternately changing the angle between plies by 45 degrees. In short, the required number of plies and the overlaying scheme are designed beforehand, and then the prepreg is cut and overlaid in accordance with the design. This completes the preparation of the prepreg.

### [Method for laminating prepregs and manufacturing a composite]

The above-described CFRP prepreg is laid on a magnesium alloy part having being coated with the above-described epoxy adhesive. When the whole is heated in this state, the epoxy resin in the epoxy adhesive and in the prepreg melts once and becomes subsequently cured. To firmly bond the alloy part and the prepreg, these are heated in a compressed state against each other. Air trapped in gaps between the alloy part and the prepreg must be driven out during melting of the resin. For instance, a support base is manufactured beforehand in accordance with the shape of the support face of the magnesium alloy, on the opposite side of the bonding surface of the magnesium alloy. Aluminum foil or a polyethylene film is laid over the base, and then the above-described magnesium alloy part is placed thereon. A prepreg is laid on the magnesium alloy part, and polyethylene film is laid on the prepreg. Then, affixing member such as structural member or the like, manufactured separately and shaped in accordance with the final prepreg shape, is placed on the polyethylene film. A weight is further placed on the whole, to enable pressing and fixing during thermal curing.

Obviously, the alloy part and the prepreg need only be cured while pressing against each other, and hence various pressing methods can be devised other than using the weight of a load. In aircraft structural members, an entire assembly is sealed in a heat-resistant film bag and is heated under reduced pressure, in such a manner so as to forcibly drive out air in the interior upon melting of the entire epoxy fraction. Prepreg becomes compacted as a certain amount of air is evacuated. Thereafter, air is fed back into the film bag, so that curing takes place under rising pressure. The inventors lacked experimental equipment to replicate the above procedure, and thus the tests were carried out assuming that air trapped in the prepreg was substantially driven out on account of the pressure exerted during melting of the epoxy fraction.

Composite heating is accomplished by placing the whole assembly in a hot-air dryer or an autoclave. Ordinarily, heating is carried out at a temperature of 110 to 140°C. The adhesive component melts once and gels over about several tens of minutes. Preferably, heating proceeds then for several tens of minutes at a higher temperature of 150 to 170°C, to bring curing about. The optimal temperature conditions vary depending on the epoxy component and the curing agent component. After heating and cooling, the mold is removed and the molded product is taken out. When using the above-described polyethylene films or aluminum foil for enabling demolding, these are likewise removed when the molded product is taken out of the mold.

### [Baking jig 1]

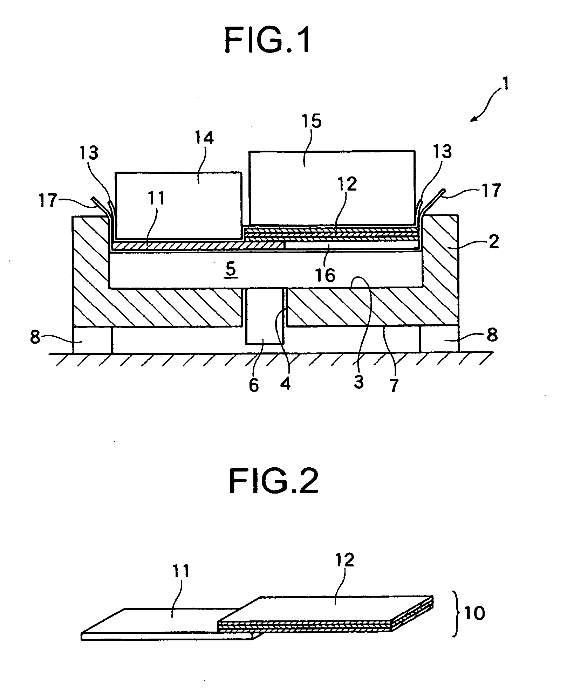

Fig. 1 is a cross-sectional diagram of a baking jig for baking a magnesium alloy plate piece and a CFRP. Fig. 2 illustrates an integrated composite 10 of a magnesium alloy plate piece and a CFRP, produced through baking of a magnesium alloy plate piece 11 and a CFRP 12 in the baking jig 1. The baking jig 1 is a fixing jig for baking the CFRP 12 and the magnesium alloy plate piece 11. A rectangular mold recess 3 is opened on the top face of a mold body 2. A mold through-hole 4 is formed in the bottom of the mold body 2.

A bottom plate projection 6 of a mold bottom plate 5 is inserted into the mold through-hole 4. The bottom plate projection 6 projects out of a mold bottom plate 7 of the mold body 2. The bottom face of the mold body 2 rests on a mold seat 8. With the mold bottom plate 5 inserted in the mold recess 3 of the mold body 2, a magnesium alloy composite 10 is manufactured through baking of the magnesium alloy plate piece 11 and the CFRP 12, fixed to each other as illustrated in Fig. 2, in the baking jig 1. The magnesium alloy plate piece composite 10 is manufactured in accordance with the procedure outlined below. Firstly, a demolding film 17 is laid over the entire surface of the mold bottom plate 5. Next, the magnesium alloy plate piece 11 and a plate-like PTFE spacer 16 are placed on the demolding film 17. Then, 3 to 5 plies of weaved cloth-like carbon fibers (T-300 by Toray, Tokyo, Japan), cut to a desired size, and are laid on the end of the magnesium alloy plate piece 11 and on the PTFE spacer 16 made of PTFE (polytetrafluoroethylene resin). A volume of about 1 cc of an uncured epoxy adhesive (EP-106) is discharged out of a syringe onto the carbon fiber fabric, to impregnate the latter and produce thereby the uncured CFRP prepreg.

After preparing the CFRP prepreg, a demolding film 13, which is a polyethylene film for demolding, is further laid on the magnesium alloy plate piece 11 and the CFRP prepreg 12. Then PTFE blocks 14, 15 made of PTFE, as weights, are placed on the demolding film 13. A weight (not shown) of several hundred g is further placed, as the case may require, on the PTFE blocks 14, 15. The baking jig 1 is then placed, in this state, in a baking oven, where the prepreg is cured. After cooling, the weights, the seat 8 and so forth are removed, and the lower end of the bottom plate projection 6 is pushed against the floor, to remove the magnesium alloy composite 10 (Fig. 2), obtained through bonding of the magnesium alloy plate piece 11 and the CFRP, along with the demolding films 13, 17. The PTFE spacer 16 and the demolding films 13, 17 are non-adhesive materials, and can thus be easily stripped off the baked CFRP.

### [Examples of magnesium alloy composite use]

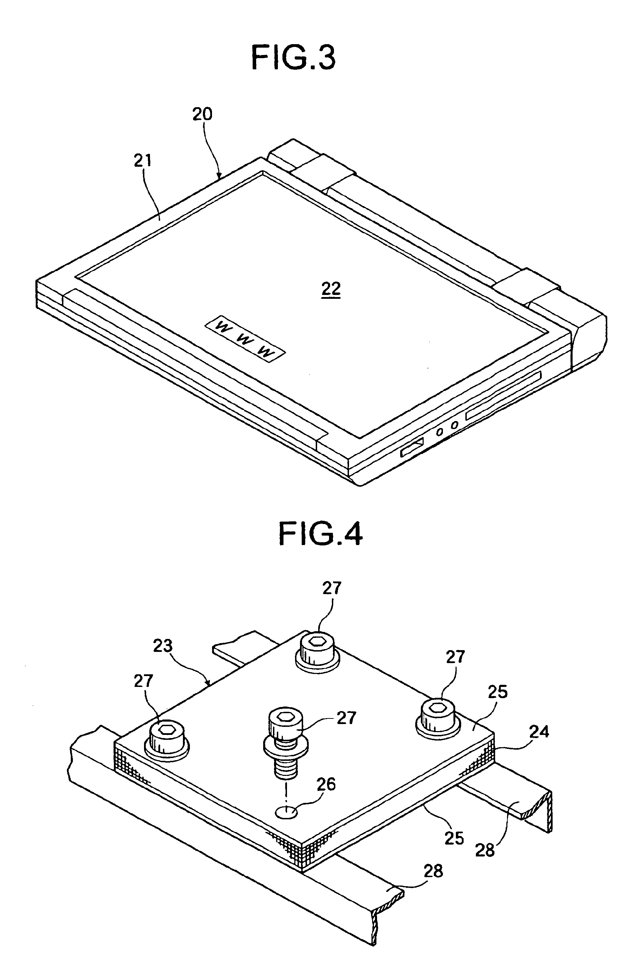

Fig. 3 is an external view diagram of an example in which the magnesium alloy composite of the present invention is used in a cover 20 of a notebook computer. An outer frame 21 that constitutes the outer edge of the cover 20 is made of a magnesium alloy. The flat central portion delimited by the outer frame 21 is a flat-plate portion 22 made of cured CFRP prepreg. The outer frame 21 made of a magnesium alloy and the outer peripheral face of the flat-plate portion 22 are bonded in accordance with the above-described bonding method. Portable notebook computers must be made as light as possible, and must also be sturdy to protect internal electronic circuits against shock loads that occur when, for instance, the notebook is dropped. The outer frame 21 made of a magnesium alloy and the flat-plate portion 22 made of CFRP embody characteristics that make them suitable to that end.

Fig. 4 illustrates an example of a structure using a composite plate material of CFRP and a magnesium alloy plate resulting from bonding a magnesium alloy plate to the front and rear faces of a flat plate-like CFRP. A magnesium alloy composite plate material 23, as a laminate material, has a three-layer structure in which a CFRP 24 is disposed in an interlayer portion, and magnesium alloy plates 25 are bonded to the front and rear faces of the CFRP 24. Through-holes 26 are opened in the magnesium alloy composite plate material 23. Bolts 27 are inserted through the through-holes 26. The bolts 27 run also through metallic L-shaped members 28, having an L-shaped cross section, disposed below the magnesium alloy composite plate material 23. The bolts are screwed into nuts (not shown) disposed on the underside.

The magnesium alloy composite plate material 23 and the angle member 28 constitute an integrated structure through fastening by the bolts and nuts. The magnesium alloy plates 25 are bonded to the front and rear faces of the CFRP 24, and hence the CFRP 24 is not damaged on account of, for instance, the fastening pressure exerted by the fastening bolts 27, or through friction with the bolts 27. The magnesium alloy composite plate material 23, therefore, brings out the characteristics of both the CFRP 24 and the magnesium alloy plates 25, and can thus make up a structure that is lightweight and mechanically strong.

In the magnesium alloy composite of the present invention, as described above, a magnesium alloy and a CFRP can be bonded strongly to each other. The magnesium alloy composite is therefore both lightweight and highly strong, and can hence be used to construct bodies, casings, parts and the like in various equipment. The magnesium alloy composite can be used, for instance, as a constituent in bodies, casings and parts in mobile equipment such as automobiles, bicycles, mobile robots and the like. Also, the method for manufacturing a magnesium alloy composite of the present invention allows manufacturing a composite in which a magnesium alloy is strongly fixed (bonded) to a CFRP, using an adhesive, by just subjecting the magnesium alloy to a simple conversion treatment.

### BRIEF DESCRIPTION OF THE DRAWINGS

Fig. 1 is a cross-sectional diagram of a baking jig for curing a magnesium alloy piece and FRP prepreg in a hot-air dryer;
Fig. 2 illustrates a test piece of a magnesium alloy composite resulting from bonding a magnesium alloy piece and FRP prepreg using an epoxy adhesive, to measure the bonding strength between the foregoing in terms of tensile fracture;
Fig. 3 is an external view diagram of an example in which the magnesium alloy composite of the present invention is used in the cover of a notebook computer;
Fig. 4 illustrates the appearance of an example of a structure of an integrated product in which a CFRP is sandwiched between magnesium alloy plate materials;
Fig. 5 illustrates a test piece of two magnesium alloy plate pieces bonded using an epoxy adhesive, to measure bonding strength in terms of tensile fracture;
Fig. 6 is an electron micrograph at 100,000 magnifications of a test piece of an AZ31B magnesium alloy having had the surface thereof treated in accordance with experimental example 1;
Fig. 7 is an electron micrograph at 100,000 magnifications of a test piece of an AZ31B magnesium alloy having had the surface thereof treated in accordance with experimental example 2; and
Fig. 8 are electron micrographs at 10,000 and 100,000 magnifications of a test piece of an AZ91D magnesium alloy having had the surface thereof treated in accordance with experimental example 2.

### BEST MODE FOR CARRYING OUT THE INVENTION

Embodiments of the present invention are explained below based on experimental examples. Fig. 2 illustrates an example of the simplest structure of a magnesium alloy composite. This structure has the standard shape of a composite that is an integrated product for measuring the bonding strength, in terms of shear fracture strength, between the magnesium alloy and an FRP. Fig. 5 illustrates a test piece resulting from bonding two magnesium alloy plate pieces 30, 31, obtained in accordance with the treatment method of the present invention, using an epoxy adhesive. The test piece is used for measuring the bonding strength between the magnesium alloys. The bonding surface 32 of Fig. 5 is the adhesion surface between the magnesium alloy plate pieces 30, 31, and has an area given by m x l, as illustrated in the figure.

### [Experimental equipment employed]

The following instruments were used for measurements and so forth in the specific working examples described below.

### (a) X-ray surface observation (XPS observation)

ESCA "AXIS-Nova (by Kratos Analytical/Shimadzu (Kyoto, Japan)", was used to observe the constituent elements to a depth of 1 to 2 nm over an area of several µm across.

### (b) Electron microscopy

Observations were carried out at 1 to 2 kV using a SEM electron microscope "S-4800 (by Hitachi, Tokyo, Japan)" and "JSM-6700F (by JEOL, Tokyo, Japan)".

### (c) Scanning probe microscopy

"SPM-9600 (by Shimadzu)" was used.

### (d) X-ray diffractometry (XRD observation)

"XRD6100 (by Shimadzu)" was used.

### (e) Measurement of composite bonding strength

A tensile tester "Model 1323 (Aikoh Engineering, Osaka, Japan" was used, to measure shear fracture strength at a pulling rate of 10 mm/minute.

### [Experimental example 1](Magnesium alloy and adhesive)

A 1-mm thick plate material of commercial AZ31B was procured, and was cut into 45 mm x 18 mm rectangular pieces. A 7.5% degreasing aqueous solution at 65°C was prepared in a dipping bath by adding a commercially available degreasing agent for magnesium alloys "Cleaner 160 (by Meltex, Tokyo, Japan)" to water. The magnesium alloy plate material was immersed for 5 minutes in the above aqueous solution, followed by thorough rinsing with water. Next, the magnesium alloy plate material was immersed for 4 minutes in another dipping bath of a 1% aqueous solution of citric acid hydrate at 40°C, and was thoroughly rinsed with water thereafter. An aqueous solution comprising 1% of sodium carbonate and 1% of sodium hydrogen carbonate, at 65°C, was prepared in a separate dipping bath. The magnesium alloy plate material was immersed in this aqueous solution for 5 minutes, followed by thorough rinsing with water. It was judged that aluminum smut could be dissolved and removed through immersion in this weakly basic aqueous solution and subsequent water rinsing.

Next, the alloy plate material was immersed for 5 minutes in another dipping bath of a 15% aqueous solution of caustic soda at 65°C, and was rinsed with water. It was judged that zinc smut could be dissolved and removed through immersion in this strongly basic aqueous solution and subsequent water rinsing. Next, the alloy plate material was immersed for 1 minute in another dipping bath of a 0.25% aqueous solution of citric acid hydrate at 40°C, and was rinsed with water. Next, the alloy plate material was immersed for 1 minute in an aqueous solution comprising 2% of potassium permanganate, 1% of acetic acid and 0.5% of sodium acetate hydrate, at 45°C. Thereafter, the alloy plate material was rinsed with water for 15 seconds, and was then dried for 15 minutes in a warm-air dryer at 90°C.

After drying, the magnesium alloy plate material was wrapped in aluminum foil and was stored further sealed in a polyethylene bag. Four days later, one of the pieces was observed using an electron microscope. The resulting micrograph is illustrated in Fig. 6. The surface was an ultra-fine irregular surface exhibiting irregular stacks of spherical bodies which have a diameter of 80 to 120 nm and from which there grew innumerable rod-shaped protrusions having a diameter of 5 to 20 nm and a length of 10 to 30 nm. The roughness of another piece, as observed by scanning using a scanning probe microscope, revealed an average length, i.e. an average length of the roughness period (RSm) of 2.1 µm, and a maximum height roughness (Rz) of 1.1 µm according to the Japanese Industrial Standards (JIS) and International Organization for Standardization (ISO).

On the same day, the magnesium alloy plate pieces were taken out and the ends thereof were thinly coated with a commercially available liquid one-liquid dicyandiamide-cured epoxy adhesive "EP-106 (by Cemedine, Tokyo, Japan)". The pieces were placed in a desiccator, with the coated surface facing up, and the desiccator was evacuated to 3 mmHg using a vacuum pump. One minute after evacuation, air was let in to revert the pressure to normal pressure (atmospheric pressure). The operation of reverting to normal pressure after depressurization was repeated three times, and then the magnesium alloy pieces were removed from the desiccator. The end faces of magnesium alloy pieces 30 and 31 were coated with adhesive and were stacked onto each other, as illustrated in Fig. 5, over a bonding surface 32 area therebetween of about 0.5 cm². The bonded pieces were placed in a hot-air dryer at 135°C, where the two magnesium alloy pieces 30, 31 were heated with a 100 g weight placed thereon. After 40 minutes of heating, the temperature setting of the hot-air dryer was changed to 165°C, to raise the temperature. Once reached, the temperature of 165°C was kept for 20 minutes, after which the hot-air dryer was switched off. The dryer was left to cool with the door closed.

Two days later, the bonded pieces were subjected to a tensile fracture test. The shear fracture strength, averaged over four sets, was very high, of 63 MPa. The thickness of the solidified epoxy adhesive layer was measured on the basis of the thickness of the integrated product before the fracture test. The epoxy adhesive layer thickness ranged from 0.08 to 0.11 mm, and averaged 0.09 mm. In the test, the pair of magnesium alloy pieces 30, 31 was not excessively pressed against each other, so that the distance between metal plates was within an ordinary range in bonding operations. From the viewpoint of adhesion science, it appears that a thinner adhesive layer thickness is observed to be accompanied by higher fracture strength upon adhesive bonding of two metal pieces. The purpose of the example is not to set a bonding strength record, but rather understanding in what way strong bonding can be achieved by means of a so-called ordinary operation. Regardless of differences in the thickness of the adhesive layer, the fracture strength in four pieces exhibited variability no greater than ±10%. Although the inventors are no specialists on adhesive bonding fracture, we believe that such a narrow variability range is suggestive of very good reproducibility.

### [Experimental example 2](Magnesium alloy and adhesive)

A 1-mm thick plate material of commercial AZ31B was procured, and was cut into 45 mm x 18 mm rectangular pieces of a magnesium alloy plate material. A 7.5% degreasing aqueous solution at 65°C was prepared in a dipping bath by adding a commercially available degreasing agent for magnesium alloys "Cleaner 160 (by Meltex)" to water. The magnesium alloy plate material was immersed for 5 minutes in the above aqueous solution, followed by thorough rinsing with water. Next, the magnesium alloy plate material was immersed for 4 minutes in another dipping bath of a 1% aqueous solution of citric acid hydrate at 40°C, and was thoroughly rinsed with water thereafter. Meanwhile, 9 L of a suspension at 30°C, having dissolved therein 7.5% of a commercially available degreasing agent "NE-6 (by Meltex, Tokyo, Japan)" for aluminum alloys, were prepared in a large bucket. Then a total 500 g of dry ice were added slowly to the bucket where the carbon dioxide gas was absorbed by the suspension. This liquid was moved to a dipping bath, where the temperature was raised to 65°C. The alloy plate material was immersed for 5 minutes in the bath, followed by thorough rinsing with water.

Next, the magnesium alloy plate material was immersed for 5 minutes in another dipping bath of a 15% aqueous solution of caustic soda at 65°C, and was rinsed with water. Next, the alloy plate material was immersed for 1.5 minutes in an aqueous solution comprising 3% of potassium permanganate, 1% of acetic acid and 0.5% of sodium acetate hydrate, at 45°C. Thereafter, the alloy plate material was rinsed with water for 15 seconds, and was then dried for 15 minutes in a warm-air dryer at 90°C. After drying, the magnesium alloy plate material was wrapped in aluminum foil and was stored further sealed in a polyethylene bag. Four days later, one of the pieces was observed using an electron microscope. The resulting micrograph is illustrated in Fig. 7. The micrograph showed an ultra-fine irregular surface covered with innumerable tangled rod-shaped or spherical ultra-fine irregularities having a diameter of 5 to 20 nm and a length of 20 to 200 nm. The pieces were subsequently tested in exactly the same way as in experimental example 1. The magnesium alloy plate pieces were bonded to each other using an epoxy adhesive and were subjected to a tensile fracture test. The shear fracture strength, averaged over four sets, was very high, of 50 MPa.

### [Experimental example 3](Magnesium alloy and adhesive)

A 1.2 mm-thick plate like product was die-cast using an AZ91D magnesium alloy. The casting was whittled to a thickness of 1 mm and was cut to 45 mm x 18 mm rectangular pieces of a magnesium alloy plate material. An aqueous solution was prepared in a dipping bath by adding, to water at a temperature of 65°C, a commercially available degreasing agent "Cleaner 160 (by Meltex)" for magnesium alloys, at a concentration of 7.5%. The magnesium alloy plate material was immersed for 5 minutes in the above aqueous solution, followed by thorough rinsing with water. Next, the magnesium alloy plate material was subjected to chemical etching by being immersed for 2 minutes in another dipping bath of a 1% aqueous solution of malonic acid at 40°C, followed by water rinsing. An aqueous solution comprising 1% of sodium carbonate and 1% of sodium hydrogen carbonate, at 65°C, was prepared in a separate dipping bath. The magnesium alloy plate material was immersed in this aqueous solution for 5 minutes, followed by thorough rinsing with water.

Next, the alloy plate material was immersed for 5 minutes in another dipping bath of a 15% aqueous solution of caustic soda at 65°C, and was rinsed with water. Next, the alloy plate material was immersed for 1 minute in another dipping bath of a 0.25% aqueous solution of citric acid hydrate at 40°C, and was rinsed with water. Next, the alloy plate material was immersed for 1 minute in an aqueous solution comprising 2% of potassium permanganate, 1% of acetic acid and 0.5% of sodium acetate hydrate, at 45°C. Thereafter, the alloy plate material was rinsed with water for 15 seconds, and was then dried for 15 minutes in a warm-air dryer at 90°C. After drying, the magnesium alloy plate material was wrapped in aluminum foil and was stored further sealed in a polyethylene bag. Fig. 8 illustrates observation results using an electron microscope at 10,000 and 100,000 magnifications.

Unlike in experimental examples 1 and 2, in experimental example 3 there was observed a surface substantially entirely covered with ultra-fine irregularities having a shape in which granules or irregular polyhedral bodies having a diameter of 20 to 40 nm are stacked, resembling the uneven ground of a lava plateau slope. The surface roughness of another piece, as observed by scanning using a scanning probe microscope, revealed an average length (RSm) of 4.5 µm, and a maximum height roughness (Rz) of 1.8 µm, according to the Japanese Industrial Standards (JIS), International Organization for Standardization (ISO). Otherwise, the pieces were tested in exactly the same manner as in experimental example 1. The magnesium alloy plate pieces were bonded to each other using an epoxy adhesive and were subjected to a tensile fracture test. The shear fracture strength, averaged over four sets, was very high, of 55 MPa. The average thickness of the epoxy adhesive cured layer was 0.10 mm.

### [Experimental example 4](Magnesium alloy and adhesive)

A 3.5 mm-thick plate like product was die-cast using an AZ91D magnesium alloy. The casting was machined into multiple 3 mm x 4 mm x 18 mm rod-like pieces. A 1.5 mm φ through-hole was opened in the end of each rod, and a PVC-coated copper wire was threaded through the hole. Exactly the same liquid treatment as in experimental example 3 was performed then but using herein the rod-like pieces instead of the plate-like pieces of experimental example 3. That is, the AZ91D rod-like pieces were degreased, were rinsed with water, were acid-etched, were rinsed with water, were subjected to the above-described first and second smut treatments, were fine-etched and rinsed with water, were further subjected to a conversion treatment using an aqueous solution of potassium permanganate, were rinsed with water, and were dried.

Thereafter, the ends of two pieces were bonded to each other using the epoxy adhesive "EP106", in substantially the same way as in experimental example 3. Specifically, the adhesive was applied to the end having no through-hole, the operation of depressurization and return to normal pressure was carried out, and the coated faces were affixed abutting each other. The two pieces were then fixed to each other through wrapping in adhesive tape, and were placed horizontally in a hot-air dryer, where they were thermally cured.

Two days after bonding, the pieces were set in a tensile tester, to measure the tensile fracture strength of the pieces. The result averaged over four sets was of 50 MPa. The average thickness of the adhesive layer observed on the fracture surfaces was 0.18 mm. These results suggest that the shear fracture strength (experimental example 3) and tensile fracture strength have substantially identical values.

### [Experimental example 5] (Adhesive)

A commercially available liquid one-liquid dicyandiamide-cured epoxy adhesive "EP-106 (by Cemedine)" was procured. An ethylene-acrylate-maleic anhydride terpolymer "Bondine TX8030(trademark) by Arkema)", as a polyolefin resin, was procured, was frozen at liquid-nitrogen temperature, and was crushed to yield a 30 µm mesh-pass powder. Glass fibers having an average fiber diameter of 9 µm and fiber length of 3 mm "RES03-TP91 (by Nippon Sheet Glass)" were procured and finely ground in a mortar. A polyethylene beaker was charged with 100 g of the epoxy adhesive "EP-106", 5 g of the above powdered polyolefin resin, and 10 g of the above glass fibers. The whole was thoroughly stirred and left to stand for 1 hour, followed by renewed stirring to elicit thorough blending. The resulting blend yielded an epoxy adhesive composition. Tests were then performed in exactly the same way as in Experimental example 1, but using herein the obtained adhesive composition instead of "EP-106". Two days after adhesive curing, the bonded pieces were subjected to a tensile fracture test. The shear fracture strength, averaged over four sets, was of 58 MPa.

### [Experimental example 6] (Adhesive)

A commercially available epoxy adhesive "EP-106" was procured. A glycidyl methacrylate-ethylene copolymer "Bond First E(trademark) by Sumitomo Chemical)", as a polyolefin resin, was procured, was frozen at liquid-nitrogen temperature, and was crushed to yield a 30 µm mesh-pass powder. A polyethylene beaker was charged with 100 g of the epoxy adhesive "EP-106", 5 g of the above powdered polyolefin resin, and 10 g of a crushed product of the same glass fibers "RES03-TP91" of experimental example 4. The whole was thoroughly stirred and left to stand for 1 hour, followed by renewed stirring to elicit thorough blending. The resulting blend yielded an epoxy adhesive composition. Tests were then performed in exactly the same way as in Experimental example 19, but using herein the obtained adhesive composition instead of "EP-106". Two days after adhesive curing, the bonded pieces were subjected to a tensile fracture test. The shear fracture strength, averaged over four sets, was of 60 MPa.

In the light of the present experimental example 6 and experimental examples 1 and 5, it is evident that the magnitude of the basic bonding strength is determined by the shape and characteristics of the metal surface. The fact that the results of the present experimental example and experimental examples 1 and 5 were substantially identical suggested that the prerequisite basic performance of the adhesive itself, "EP-106", did not change in these experimental examples. The adhesive in the experimental examples actually comprised an elastomer. Also, the coefficient of linear expansion of the adhesive was expected to be close to that of metals, on account of the filler that was blended in. Therefore, conventional knowledge among practitioners of adhesive science suggested that good results were to be expected upon exposure to vibration and high temperature.

### [Experimental example 7] (Preparation of commercial-type prepreg)

Prepreg is a sheet-like intermediate material for molding, comprising a cloth of carbon, glass or the like impregnated with a thermosetting resin. Upon thermal curing, prepregs yield lightweight and strong fiber-reinforced plastics (FRPs). In experimental example 7, a thermosetting resin as given in Table 1 was prepared for producing such a prepreg.

**Table 1**

| Thermosetting resin for prepreg | | |
|---|---|---|
| Resin fraction | | Proportion (parts by weight) |
| Epoxy resin | - Brominated bisphenol A solid epoxy resin "EPC-152 by Dainippon Ink & Chemicals)" | 10.0 |
| | - Bisphenol A liquid epoxy resin "EP-828 (by Yuka-Shell Epoxy)" | 13.9 |
| | - Bisphenol F liquid epoxy resin "EPC-830 (by Dainippon Ink & Chemicals)" | 24.8 |
| Elastomer | - Weakly crosslinked carboxyl-terminated solid acrylonitrile butadiene rubber "DN-611 (by Zeon Corporation)" | 8.0 |
| | - Thermoplastic hydroxyl-terminated polyether sulfone "PES-100P (by Mitsui Toatsu Chemicals)" | 3.0 |

| Curing agent | | |
|---|---|---|
| - Tetraglycidyldiaminodiphenylmethane "ELM-434 (by Sumitomo Chemical)" | | 15.0 |
| - 4,4'-diaminodiphenyl sulfone "4,4'-DDS (by Sumitomo Chemical)" | | 25.0 |
| - BF₃-monoethylamine complex "BF₃-MEA" | | 0.3 |
| Total | | 100.0 |

The thermosetting resin comprising the components of Table 1 was mixed at normal temperature and was rolled into a sheet shape. The obtained thermosetting resin film was set in a prepreg machine, and was pressure-bonded from both sides of unidirectionally aligned carbon fibers "T-300 (by Toray)", as reinforcing fibers, under application of pressure in accordance with known methods, to prepare a prepreg having a resin content of 38% and a fiber areal weight of 190 g/m⁻.

### [Experimental example 8] (Production and evaluation of a composite)

A 1.0 mm-thick magnesium alloy plate material AZ31B was cut into rectangular 45 mm × 15 mm pieces. The pieces were subjected to a liquid treatment in exactly the same way as in experimental example 1. That is, the pieces were degreased in an aqueous solution of degreasing agent "Cleaner 160" for magnesium alloys and were rinsed with water. The pieces were then etched in a 1% aqueous solution of citric acid hydrate and were rinsed with water. The pieces where subjected next to a first smut treatment using an aqueous solution comprising 1% of sodium carbonate and 1% of sodium hydrogen carbonate, followed by water rinsing. The pieces were subjected next to a second smut treatment using a 15% caustic soda aqueous solution. The pieces were then fine-etched in a 0.25% aqueous solution of citric acid hydrate and were rinsed with water. The pieces were converted next using an aqueous solution comprising 2% of potassium permanganate, 1% of acetic acid and 0.5% of sodium acetate hydrate, followed by water rinsing. Lastly, the pieces were dried for 15 minutes in a warm-air dryer at a temperature of 90°C.

After drying, the magnesium alloy plate material was wrapped in aluminum foil and was stored. On the same day, the magnesium alloy plate pieces were taken out and the ends thereof were thinly coated with a commercially available liquid one-liquid dicyandiamide-cured epoxy adhesive "EP-106 (by Cemedine)". The pieces were placed in a desiccator, with the coated surface facing up, and the desiccator was evacuated to 3 mmHg using a vacuum pump. One minute after evacuation, air was let in to revert the pressure to normal pressure. The operation of reverting to normal pressure after depressurization was repeated three times, and then the magnesium alloy plate pieces were removed from the desiccator.

Meanwhile, a baking jig 1 for baking, illustrated in Fig. 1, was prepared next. A demolding film 17, resulting from cutting a 0.05 mm-thick polyethylene film into strips, was laid in the mold body 2. The magnesium alloy plate 11 was then placed on the demolding film 17. Thereon there was laid a PTFE spacer 16, and then a weaved cloth of carbon fibers "T-300 (by Toray)", cut separately, was overlaid as the CFRP prepreg of Fig. 1 Three plies of the cloth were overlaid while coating the lamination surface with the epoxy adhesive "EP-106" discharged out of a syringe. Next, a polyethylene film piece 13, as a demolding film, was placed on top of the magnesium alloy plate 11.

The "EP-106" was used in an amount of about 1 cc. PTFE blocks 14, 15 for pressing down were then placed on the polyethylene film piece 13, and the whole was moved into a hot-air dryer. In the hot-air dryer, 0.5 kg iron weights were further placed on the blocks 14, 15, respectively. The dryer was energized to raise the temperature to 135°C. The temperature was set to 135°C, and heating proceeded for 40 minutes. After a break of 5 minutes, the temperature was raised to 165°C, and was held there for 20 minutes. The dryer was then powered off and was left to cool with the door closed. On the next day, the baking jig 1 was removed from the dryer and the molded product was demolded from the baking jig 1. The polyethylene film pieces 13, 17 were stripped off to yield the magnesium alloy composite 10 illustrated in Fig. 2. The same operation was repeated to obtain eight integrated products of a magnesium alloy composite 10 of the magnesium alloy plate piece 11 and the CFRP 12.

On the second day after bonding, four composites were subjected to a tensile fracture test. The CFRP portion was sandwiched between two pieces of sandpaper-roughened 1 mm-thick SUS304 stainless steel. The resulting stack was clamped and fixed between chuck plates. The average shear fracture strength for four sets was very high, of 65 MPa. The bonding surface area was calculated as 1 × m, as in Fig. 2. The remaining four integrated bodies were clamped in the tensile tester in the same way as above, and were loaded up to about 30 MPa, whereupon pulling was discontinued. After 10 minutes, the chuck was then loosened and the pieces were removed from the tester and left to stand. On the next day, the pieces were subjected to a tensile fracture test that yielded an average result of 63 MPa, i.e. no particular drop in bonding strength was observed.

### [Experimental example 9] (Production and evaluation of a composite)

As in experimental example 8, a 1.0 mm-thick AZ31B magnesium alloy plate material was cut into 45 mm × 15 mm rectangular pieces, to prepare test pieces for measurement of bonding strength in the same way as above. That is, an adhesive was coated onto the magnesium alloy pieces, and these were placed in a desiccator that was repeatedly evacuated using a vacuum pump and reverted again to normal pressure, three times, to prepare adhesive-coated magnesium alloy pieces. A baking jig 1 for baking, illustrated in Fig. 1, was prepared next. A demolding film 17, resulting from cutting a 0.05 mm-thick polyethylene film into strips, was laid over the entire surface of the mold bottom plate 5. The magnesium alloy plate piece 11 was then placed on the demolding film 17. The procedure thus far was identical to that of experimental example 8, except that the CFRP prepreg was the one prepared in experimental example 7.

That is, three plies of the cut prepreg of experimental example 7 were overlaid to yield the CFRP prepreg illustrated in Fig. 1. The demolding film 13 was laid on top of the magnesium alloy, the PTFE pressing blocks 9 were placed then, and the whole was moved into a hot-air dryer. In the hot-air dryer, 0.5 kg iron weights were further placed on the pressing blocks 9. The dryer was energized to raise the temperature to 135°C. Heating proceeded at a temperature of 135°C for 60 minutes. After a break of 10 minutes, the temperature was raised to 170°C, and was held there for 40 minutes. The dryer was then powered off and was left to cool with the door closed. On the next day, the baking jig 1 was removed from the dryer and demolded from the jig. The polyethylene films were stripped off to yield the molded product illustrated in Fig. 2.

A tensile fracture test was carried out on the second day after bonding. The CFRP portion was sandwiched between two pieces of sandpaper-roughened 1 mm-thick SUS304 stainless steel. The resulting stack was clamped and fixed between chuck plates. The average shear fracture strength for four sets was very high, of 57 MPa. The bonding surface area was calculated as 1 × m, as in Fig. 2.

### [Experimental example 10](Magnesium alloy and adhesive: comparative example)

A 1 mm-thick plate material of commercial AZ31B magnesium alloy, having a metal grain size of 14 to 20 µm, was procured from a vendor. The metal grain size of currently marketed AZ31B plate materials is often finer, of 5 to 7 µm, as compared with that of alloys manufactured in the past. Accordingly, we procured an AZ31B material having a large metal grain size, close to that of a defective product, since a large metal grain size results in a metal material having a rough surface, without relying so much on chemical etching.

The magnesium alloy plate material was cut to 45 mm x 18 mm rectangular pieces. A 7.5% degreasing aqueous solution at 65°C was prepared in a dipping bath by adding a commercially available degreasing agent for magnesium alloys "Cleaner 160 (by Meltex)" to water. The magnesium alloy plate material was immersed for 5 minutes in the above aqueous solution, followed by thorough rinsing with water. Next, the magnesium alloy plate material was immersed for 1 minute in another dipping bath of a 1% aqueous solution of citric acid hydrate at 50°C, and was thoroughly rinsed with water thereafter. An aqueous solution comprising 1% of sodium carbonate and 1% of sodium hydrogen carbonate, at 65°C, was prepared in a separate dipping bath. The magnesium alloy plate material was immersed in this aqueous solution for 5 minutes, followed by thorough rinsing with water. It was judged that aluminum smut could be dissolved and removed through immersion in this weakly basic aqueous solution and subsequent water rinsing.

Next, the alloy plate material was immersed for 5 minutes in another dipping bath of a 15% aqueous solution of caustic soda at 65°C, and was rinsed with water. It was judged that zinc smut could be dissolved and removed through immersion in this strongly basic aqueous solution and subsequent water rinsing. Next, the alloy plate material was immersed for 1 minute in another dipping bath of a 0.25% aqueous solution of citric acid hydrate at 40°C, and was rinsed with water. Next, the alloy plate material was immersed for 1 minute in an aqueous solution comprising 2% of potassium permanganate, 1% of acetic acid and 0.5% of sodium acetate hydrate, at 45°C. Thereafter, the alloy plate material was rinsed with water for 15 seconds, and was then dried for 15 minutes in a warm-air dryer at 90°C. After drying, the magnesium alloy plate material was wrapped in aluminum foil and was stored further sealed in a polyethylene bag.

One of the pieces was scanned 6 times using a scanning probe microscope to measure the surface roughness of the piece. The results revealed a roughness-curve average length, i.e. an average length of the roughness period (RSm) of 13 µm, and a maximum height roughness (Rz) of 2.1 µm according to Japanese Industrial Standards (JIS) and the like. The roughness (surface roughness) was not of micron-scale, i.e. the average length (RSm) did not lie within a range from 1 to 10 µm, as expected by the inventors. The period of the irregularities was larger than micron scale. The fine irregularities, resulting from a fine etching process and chemical conversion treatment identical to that of experimental example 1, showed the same results as the electron micrographs of Fig. 6. The small pieces were then bonded to each other using a commercially available liquid one-liquid dicyandiamide-cured epoxy adhesive "EP-106 (by Cemedine)", in exactly the same way as in experimental example 1. Two days later, the bonded pieces were subjected to a tensile fracture test. The shear fracture strength, averaged over four sets, was of 47 MPa. The result was fairly lower than in experimental example 1.

### [Experimental example 11](Magnesium alloy and adhesive: comparative example)

The same 1-mm thick plate material of commercial AZ31B magnesium alloy of experimental example 1 was used, cut into 45 mm x 18 mm cut pieces. A 7.5% degreasing aqueous solution at 65°C was prepared in a dipping bath by adding a commercially available degreasing agent for magnesium alloys "Cleaner 160 (by Meltex)" to water. The magnesium alloy plate material was immersed for 5 minutes in the above aqueous solution, followed by thorough rinsing with water. Next, the alloy plate material was immersed for 10 seconds in another dipping bath of a 1% aqueous solution of citric acid hydrate at 40°C, and was thoroughly rinsed with water.

Although not much smut was adhered, the plate material was immersed next for 5 minutes in a dipping bath of an aqueous solution comprising 1% of sodium carbonate and 1% of sodium hydrogen carbonate at 65°C, followed by thorough water rinsing. Next, the plate material was immersed for 5 minutes in another dipping bath of a 15% aqueous solution of caustic soda at 65°C, and was rinsed with water. Next, the alloy plate material was immersed for 1 minute in another dipping bath of a 0.25% aqueous solution of citric acid hydrate at 40°C, and was rinsed with water. Next, the alloy plate material was immersed for 1 minute in an aqueous solution comprising 2% of potassium permanganate, 1% of acetic acid and 0.5% of sodium acetate hydrate, at 45°C. Thereafter, the alloy plate material was rinsed with water for 15 seconds, and was then dried for 15 minutes in a warm-air dryer at 90°C.

After drying, the magnesium alloy plate material was wrapped in aluminum foil and was stored further sealed in a polyethylene bag. One of the pieces was scanned 6 times using a scanning probe microscope to measure the surface roughness of the piece. The results revealed an average length, i.e. an average length of the roughness period (RSm) of 0.5 µm, and a maximum height roughness (Rz) of 0.2 µm according to Japanese Industrial Standards (JIS). In other words, the surface roughness was not of micron-scale, i.e. the average length (RSm) did not lie within a range from 1 to 10 µm, as expected by the inventors. The period of the irregularities was smaller than micron scale. The fine irregularities, resulting from a fine etching process and chemical conversion treatment identical to that of experimental example 1, showed the same results as the electron micrographs of Fig. 6.

The magnesium alloy plate material pieces were then bonded to each other using a commercially available liquid one-liquid dicyandiamide-cured epoxy adhesive "EP-106 (by Cemedine)", in exactly the same way as in experimental example 1. Two days later, the bonded pieces were subjected to a tensile fracture test. The shear fracture strength, averaged over four sets, was of 42 MPa. The result was fairly lower than in experimental example 1.

## Claims

1. A magnesium alloy composite, comprising:
a first metal part which is made of a magnesium alloy and has micron-scale roughness produced by chemical etching, and the surface of which is covered with, under electron microscopy, ultra-fine irregularities comprising innumerable tangled rod-shaped bodies having a diameter of 5 to 20 nm and a length of 20 to 200 nm, said surface being a thin layer of a manganese oxide, **produced by immersing said magnesium alloy part in an aqueous solution comprising a permanganate salt;** and
another adherend that is bonded using, as an adhesive, an epoxy adhesive that penetrates into said ultra-fine irregularities,
**wherein said micron-scale surface roughness has an average length (RSm) of 0.8 to 10 µm and a maximum height roughness (Rz) of 0.2 to 5 µm, and**
**a bond strength with said first metal part and said another adherend is at least 42 Mpa by mean shear fracture strength.**

2. A magnesium alloy composite, comprising:
a first metal part which is made of a magnesium alloy and has micron-scale roughness produced by chemical etching, and the surface of which is covered with, under electron microscopy, ultra-fine irregularities comprising irregular stacks of spherical bodies which have a diameter of 80 to 120 nm and from which innumerable rod-shaped protrusions having a diameter of 5 to 20 nm and a length of 10 to 30 nm grow, or comprising irregularities which have a period of 80 to 120 nm and from which said innumerable rod-shaped protrusions grow, said surface being a thin layer of a manganese oxide, **produced by immersing said magnesium alloy part in an aqueous solution comprising a permanganate salt;** and
another adherend that is bonded using, as an adhesive, an epoxy adhesive that penetrates into said ultra-fine irregularities,
**wherein said micron-scale surface roughness has an average length (RSm) of 0.8 to 10 µm and a maximum height roughness (Rz) of 0.2 to 5 µm, and**
**a bond strength with said first metal part and said another adherend is at least 42 Mpa by mean shear fracture strength.**

3. A magnesium alloy composite, comprising:
a first metal part which is made of a magnesium alloy and has micron-scale roughness produced by chemical etching, and substantially the entire surface of which is covered with, under electron microscopy, ultra-fine irregularities in the form of an uneven ground of a lava plateau in which granules or irregular polyhedral bodies having a diameter of 20 to 40 nm are stacked, said surface being a thin layer of a manganese oxide, **produced by immersing said magnesium alloy part in an aqueous solution comprising a permanganate salt;** and
another adherend that is bonded using, as an adhesive, an epoxy adhesive that penetrates into said ultra-fine irregularities,
**wherein said micron-scale surface roughness has an average length (RSm) of 0.8 to 10 µm and a maximum height roughness (Rz) of 0.2 to 5 µm, and**
**a bond strength with said first metal part and said another adherend is at least 42 Mpa by mean shear fracture strength.**

4. The magnesium alloy composite according to any one of claims 1 to 3, wherein said adherend is a second metal part made of a magnesium alloy having said ultra-fine irregularities formed thereon.

5. The magnesium alloy composite according to any one of claims 1 to 3, wherein said adherend is a fiber-reinforced plastic, comprising said epoxy adhesive, and reinforced through filling and laminating of one or more types selected from among long fibers, short fibers and fiber cloth.

6. The magnesium alloy composite according to any one of claims 1 to 3, wherein said chemical etching involves immersion in an acidic aqueous solution, and a last surface treatment is an immersion treatment in an aqueous solution of a permanganate salt.

7. The magnesium alloy composite according to any one of claims 1 to 3, wherein a resin of a cured product of said epoxy adhesive contains no more than 30 parts by weight of an elastomer component relative to a total 100 parts by weight of resin fraction.

8. The magnesium alloy composite according to any one of claims 1 to 3, wherein a cured product of said epoxy adhesive contains a total of no more than 100 parts by weight of a filler relative to a total 100 parts by weight of resin fraction.

9. The magnesium alloy composite according to claim 8,
wherein said filler is one or more types of reinforcing fiber selected from among glass fibers, carbon fibers and aramid fibers, or
one or more types of a powder fillerselected from among calcium carbonate, magnesium carbonate, silica, talc, clay and glass.

10. The magnesium alloy composite according to claim 7,
wherein said elastomer component has a particle size of 1 to 15 µm, and is one or more types selected from among vulcanized rubber powder, semi-crosslinked rubber, unvulcanized rubber, a terminal-modified thermoplastic resin of a hydroxyl group-terminated polyether sulfone having a melting point/softening point not lower than 300°C, and a polyolefin resin.

11. A method for manufacturing a magnesium alloy composite, comprising:
a machining step of mechanically shaping a magnesium alloy part from a casting or an intermediate material;
a chemical etching step of immersing said shaped magnesium alloy part in an acidic aqueous solution;
a conversion treatment step of immersing said magnesium alloy part in an aqueous solution comprising a permanganate salt;
a coating step of coating an epoxy adhesive onto required portions of said magnesium alloy part; a forming step of forming a prepreg material of fiber-reinforced plastic to the required size;
an affixing step of affixing said prepreg material to the coated surface of said magnesium alloy part; and
a curing step of curing the entire epoxy resin fraction by positioning, fixing and heating said prepreg material and said magnesium alloy part.

12. A method for manufacturing a magnesium alloy composite, comprising:
a machining step of mechanically shaping a magnesium alloy part from a casting or an intermediate material;
a chemical etching step of immersing said shaped magnesium alloy part in an acidic aqueous solution;
a conversion treatment step of immersing said magnesium alloy part in an aqueous solution comprising a permanganate salt, to thereby form ultra-fine irregularities on the surface;
a coating step of coating an epoxy adhesive on said ultra-fine irregularities of said magnesium alloy part;
a curing pre-treatment step of placing said magnesium alloy part, having been coated with said epoxy adhesive, in an airtight vessel, depressurizing the vessel, and then pressurizing the vessel to thereby push said epoxy adhesive into said ultra-fine irregularities of the magnesium alloy;
a forming step of forming a prepreg material of fiber-reinforced plastic to the required size;
an affixing step of affixing said prepreg material to the coated surface of said magnesium alloy part; and
a curing step of curing the entire epoxy resin fraction by positioning, fixing and heating said prepreg material and said magnesium alloy part.

13. The method for manufacturing a magnesium alloy composite according to claim 12 or 13, wherein said micron-scale surface roughness has an average length (RSm) of 0.8 to 10 µm and a maximum height roughness (Rz) of 0.2 to 5 µm.

14. The method for manufacturing a magnesium alloy composite according to any one of claims 12 to 14,
wherein said conversion treatment step involves immersion in an weakly acidic aqueous solution of potassium permanganate.

15. The method for manufacturing a magnesium alloy composite according to any one of claims 12 to 15,
wherein a resin fraction of a cured product of said epoxy adhesive contains no more than 30 parts by weight of an elastomer component relative to a total 100 parts by weight of resin fraction.

16. The method for manufacturing a magnesium alloy composite according to any one of claims 12 to 16,
wherein said cured product contains a total of no more than 100 parts by weight of a filler relative to a total 100 parts by weight of resin fraction.

17. The method for manufacturing a magnesium alloy composite according to claim 17,
wherein said filler is one or more types of reinforcing fiber selected from among glass fibers, carbon fibers and aramid fibers, or one
or more types of a powder filler selected from among calcium carbonate, magnesium carbonate, silica, talc, clay and glass.

18. The method for manufacturing a magnesium alloy composite according to any one of claims 16 to 18,
wherein said elastomer component has a particle size of 1 to 15 µm, and is one or more types selected from among vulcanized rubber powder, semi-crosslinked rubber, unvulcanized rubber, a terminal-modified thermoplastic resin of a hydroxyl group-terminated polyether sulfone having a melting point/softening point not lower than 300°C, and a polyolefin resin.

## Patentansprüche

1. Magnesiumlegierungsverbundmaterial, umfassend:
ein erstes Metallteil, das aus einer Magnesiumlegierung hergestellt ist und eine Rauheit in der Mikrometergrößenordnung aufweist, die durch chemisches Ätzen erzeugt worden ist, und dessen Oberfläche mit unter dem Elektronenmikroskop sichtbaren ultrafeinen Unregelmäßigkeiten bedeckt ist, die unzählige durcheinander liegende stabförmige Körper umfasst, die einen Durchmesser von 5 bis 20 nm und eine Länge von 20 bis 200 nm aufweisen, welche Oberfläche eine dünne Schicht aus Manganoxid ist, die erzeugt wird durch Eintauchen des Magnesiumlegierungsteils in eine wässrige Lösung, die ein Permanganatsalz enthält; und
ein weiteres angeklebtes Teil, das unter Verwendung eines Epoxid-Klebstoffs als Klebemittel angeklebt wird, der in die ultrafeinen Unregelmäßigkeiten eindringt,
wobei die Oberflächenrauhigkeit in der Mikrometergrößenordnung eine durchschnittliche Länge (RSm) von 0,8 bis 10 µm und eine maximale Höhenrauhigkeit (Rz) von 0,2 bis 5 µm aufweist,
und eine Bindungsstärke zwischen dem ersten Metallteil und dem weiteren angeklebten Teil zumindest 42 Mpa mittlerer Scherbruchfestigkeit beträgt.

2. Magnesiumlegierungsverbundmaterial, umfassend:
ein erstes Metallteil, das aus einer Magnesiumlegierung hergestellt ist und eine Rauhigkeit in der Mikrometergrößenordnung aufweist, die durch chemisches Ätzen erzeugt wird, und dessen Oberfläche mit unter dem Elektronenmikroskop sichtbaren ultrafeinen Unregelmäßigkeiten bedeckt ist, die unregelmäßige Haufen kugelförmiger Körper mit einem Durchmesser von 80 bis 120 nm umfassen und von denen unzählige stabförmige Vorsprünge mit einem Durchmesser von 5 bis 20 nm und einer Länge von 10 bis 30 nm wachsen, oder welche Unregelmäßigkeiten mit einem regelmäßigen Abstand von 80 bis 120 nm umfassen und von welchen unzählige stabförmige Vorsprünge wachsen, welche Oberfläche eine dünne Schicht aus Manganoxid ist, die erzeugt wird durch Eintauchen des Magnesiumlegierungsteils in eine wässrige Lösung, die ein Permanganatsalz enthält; und
ein weiteres angeklebtes Teil, das unter Verwendung eines Epoxid-Klebstoffs als Klebemittel angeklebt wird, der in die ultrafeinen Unregelmäßigkeiten eindringt.
wobei die Oberflächenrauhigkeit in der Mikrometergrößenordnung eine durchschnittliche Länge (RSm) von 0,8 bis 10 µm und eine maximale Höhenrauhigkeit (Rz) von 0,2 bis 5 µm aufweist,
und eine Bindungsstärke zwischen dem ersten Metallteil und dem weiteren angeklebten Teil zumindest 42 Mpa mittlerer Scherbruchfestigkeit beträgt.

3. Magnesiumlegierungsverbundmaterial, umfassend:
ein erstes Metallteil, das aus einer Magnesiumlegierung besteht und eine Rauhigkeit in der Mikrometergrößenordnung aufweist, die durch chemisches Ätzen erzeugt wird, und dessen im wesentlichen gesamte Oberfläche mit unter dem Elektronenmikroskop sichtbaren ultrafeinen Unregelmäßigkeiten in Form eines unebenen Bodens eines Lava-Plateaus bedeckt ist, in welchem Körnchen oder unregelmäßige polyedrische Körper mit einem Durchmesser von 20 bis 40 nm geschichtet sind, welche Oberfläche eine dünne Schicht aus Manganoxid ist, die erzeugt wird durch Eintauchen des Magnesiumlegierungsteils in eine wässrige Lösung, die ein Permanganatsalz enthält; und
ein weiteres angeklebtes Teil, das unter Verwendung eines Epoxid-Klebstoffs als Klebemittel angeklebt wird, der in die ultrafeinen Unregelmäßigkeiten eindringt,
wobei die Oberflächenrauhigkeit in der Mikrometergrößenordnung eine durchschnittliche Länge (RSm) von 0,8 bis 10 µm und eine maximale Höhenrauhigkeit (Rz) von 0,2 bis 5 µm aufweist,
und eine Bindungsstärke zwischen dem ersten Metallteil und dem weiteren angeklebten Teil zumindest 42 Mpa mittlerer Scherbruchfestigkeit beträgt.

4. Magnesiumlegierungsverbundmaterial gemäß einem der Ansprüche 1 bis 3, bei welchem das angeklebte Teil ein zweites Metallteil aus einer Magnesiumlegierung ist, auf welchem die ultrafeinen Unregelmäßigkeiten ausgebildet sind.

5. Magnesiumlegierungsverbundmaterial gemäß einem der Ansprüche 1 bis 3, bei welchem das angeklebte Teil ein faserverstärkter Kunststoff ist, enthaltend den Epoxid-Klebstoff, und verstärkt durch Füllen und Schichten von einem oder mehreren Materialien, die aus der folgenden Gruppe ausgewählt sind: lange Fasern, kurze Fasern, und Gewebe.

6. Magnesiumlegierungsverbundmaterial gemäß einem der Ansprüche 1 bis 3, bei welchem das chemische Ätzen das Eintauchen in eine wässrige Säurelösung umfasst, und eine letzte Oberflächenbehandlung eine Eintauchbehandlung in eine wässrige Lösung aus einem Permanganatsalz ist.

7. Magnesiumlegierungsverbundmaterial gemäß einem der Ansprüche 1 bis 3, bei welchem ein Harz aus einem ausgehärteten Produkt aus dem Epoxid-Klebstoff nicht mehr als 30 Gewichtsanteile einer Elastomerkomponente enthält, gegenüber insgesamt 100 Gewichtsanteilen des Harzanteils.

8. Magnesiumlegierungsverbundmaterial gemäß einem der Ansprüche 1 bis 3, bei welchem ein ausgehärtetes Produkt des Epoxid-Klebstoffs insgesamt nicht mehr als 100 Gewichtsanteile eines Füllstoffs enthält, gegenüber insgesamt 100 Gewichtsanteilen des Harzanteils.

9. Magnesiumlegierungsverbundmaterial gemäß Anspruch 8, bei welchem der Füllstoff aus einer oder mehreren Arten von Verstärkungsfasern aus der folgenden Gruppe ausgewählt ist: Glasfasern, Kohlefasern, und Aramidfasern; oder aus einer oder mehreren Arten von pulverförmigen Füllstoffen, ausgewählt aus der folgenden Gruppe: Kalziumkarbonat, Magnesiumkarbonat, Kieselerde, Talk, Lehm, und Glas.

10. Magnesiumlegierungsverbundmaterial gemäß Anspruch 7, bei welchem die Elastomerkomponente eine Partikelgröße von 1 bis 15 µm aufweist und aus einem oder mehreren Materialien besteht, die aus der folgenden Gruppe ausgewählt sind: vulkanisiertes Gummipulver, halb-quervernetztes Gummi, unvulkanisiertes Gummi, an den Enden modifiziertes thermoplastisches Harz aus einem Polyethersulfon, das von einer Hydroxylgruppe abgeschlossen wird, mit einem Schmelzpunkterweichungspunkt von nicht niedriger als 300° C, und einem Polyolefinharz.

11. Verfahren zur Herstellung eines Magnesiumlegierungsverbundmaterials, umfassend die folgenden Schritte:
einen Bearbeitungsschritt der mechanischen Formung eines Magnesiumlegierungsteils durch Gießen oder aus einem Zwischenmaterial;
einen chemischen Ätzschritt des Eintauchens des geformten Magnesiumlegierungsteils in eine wässrige Säurelösung;
einen Umwandlungsbehandlungsschritt des Eintauchens des Magnesiumlegierungsteils in eine wässrige Lösung, die ein Permanganatsalz enthält;
einen Beschichtungsschritt des Beschichtens eines Epoxid-Klebstoffs auf erforderliche Bereiche des Magnesiumlegierungsteils;
einen Formschritt des Formens eines Prepreg-Materials aus faserverstärktem Kunststoff in der geforderten Größe;
einen Befestigungsschritt der Befestigung des Prepreg-Materials auf der beschichteten Oberfläche des Magnesiumlegierungsteils; und
einen Aushärtungsschritt des Aushärtens des gesamten Epoxidharzanteils durch Positionierung, Befestigung und Erhitzen des Prepreg-Materials und des Magnesiumlegierungsteils.

12. Verfahren zur Herstellung eines Magnesiumlegierungsverbundmaterials, umfassend die folgenden Schritte:
einen Bearbeitungsschritt der mechanischen Formung eines Magnesiumlegierungsteils durch Gießen oder aus einem Zwischenmaterial;
einen chemischen Ätzschritt des Eintauchens des geformten Magnesiumlegierungsteils in eine wässrige Säurelösung;
einen Umwandlungsbehandlungsschritt des Eintauchens des Magnesiumlegierungsteils in eine wässrige Lösung, die ein Permanganatsalz enthält, zur Bildung ultrafeiner Unregelmäßigkeiten auf der Oberfläche;
einen Beschichtungsschritt des Beschichtens eines Epoxid-Klebstoffs auf die ultrafeinen Unregelmäßigkeiten des Magnesiumlegierungsteils;
einen Aushärtungs-Vorbehandlungsschritt der Anordnung des Magnesiumlegierungsteils, das mit dem Epoxid-Klebstoff beschichtet ist, in einem luftdichten Gefäß, der Herabsetzung des Drucks in dem Gefäß, und der anschließenden Druckbeaufschlagung des Gefäßes, zum Einpressen des Epoxid-Klebstoffs in die ultrafeinen Unregelmäßigkeiten der Magnesiumlegierung;
einen Formungsschritt des Formens eines Prepreg-Materials aus faserverstärktem Kunststoff in der erforderlichen Größe;
einen Befestigungsschritt der Befestigung des Prepreg-Materials auf der beschichteten Oberfläche des Magnesiumlegierungsteils; und
einen Aushärtungsschritt des Aushärtens des gesamten Epoxidharzanteils durch Positionierung, Befestigung und Erhitzen des Prepreg-Materials und des Magnesiumlegierungsteils.

13. Verfahren zur Herstellung eines Magnesiumlegierungsverbundmaterials gemäß Anspruch 12 oder 13, bei welchem die Oberflächenrauhigkeit in der Mikrometergrößenordnung eine durchschnittliche Länge (RSm) von 0,8 bis 10 µm und eine maximale Höhenrauhigkeit (Rz) von 0,2 bis 5 µm aufweist.

14. Verfahren zur Herstellung eines Magnesiumlegierungsverbundmaterials gemäß einem der Ansprüche 12 bis 14, bei welchem die Umwandlungsbehandlung das Eintauchen in einer schwach sauren wässrigen Lösung aus Kaliumpermanganat umfasst.

15. Verfahren zur Herstellung eines Magnesiumlegierungsverbundmaterials gemäß einem der Ansprüche 12 bis 15, bei welchem ein Harzanteil eines ausgehärteten Produkts des Epoxid-Klebstoffs nicht mehr als 30 Gewichtsanteile einer Elastomerkomponente enthält, gegenüber insgesamt 100 Gewichtsanteilen des Harzanteils.

16. Verfahren zur Herstellung eines Magnesiumlegierungsverbundmaterials gemäß einem der Ansprüche 12 bis 16, bei welchem das ausgehärtete Produkt insgesamt nicht mehr als 100 Gewichtsanteile eines Füllstoffs enthält, gegenüber insgesamt 100 Gewichtsanteilen des Harzanteils.

17. Verfahren zur Herstellung eines Magnesiumlegierungsverbundmaterials gemäß Anspruch 17, bei welchem der Füllstoff aus einer oder mehreren Arten von Verstärkungsfasern aus der folgenden Gruppe ausgewählt ist: Glasfasern, Kohlefasern, und Aramidfasern; oder aus einer oder mehreren Arten von pulverförmigen Füllstoffen, ausgewählt aus der folgenden Gruppe: Kalziumkarbonat, Magnesiumkarbonat, Kieselerde, Talg, Lehm, und Glas.

18. Verfahren zur Herstellung eines Magnesiumlegierungsverbundmaterials gemäß einem der Ansprüche 16 bis 18, bei welchem die Elastomerkomponente eine Partikelgröße von 1 bis 15 µm aufweist und aus einem oder mehreren Materialien besteht, die aus der folgenden Gruppe ausgewählt sind: vulkanisiertes Gummipulver, halb-quervernetztes Gummi, unvulkanisiertes Gummi, an den Enden modifiziertes thermoplastisches Harz aus einem Polyethersulfon, das von einer Hydroxylgruppe abgeschlossen wird, mit einem Schmelzpunkt-Erweichungspunkt von nicht niedriger als 300° C, und einem Polyolefinharz.

## Revendications

1. Elément composite en alliage de magnésium, comportant :
une première pièce métallique, laquelle est en alliage de magnésium et a des reliefs à échelle micrométrique créés par attaque chimique, et dont la surface est couverte, si on l'observe par microscopie électronique, de microreliefs comprenant d'innombrables corps en formes de baguettes entremêlées de 5 à 20 nm de diamètre et 20 à 200 nm de longueur, ladite surface étant une fine couche d'oxyde de manganèse obtenue en plongeant ladite pièce en alliage de magnésium dans une solution aqueuse comprenant un sel sous forme de permanganate ; et
un autre substrat adhérent fixé en utilisant, comme adhésif, une colle époxy pénétrant dans lesdits microreliefs,
lesdits reliefs de surface à échelle micrométrique ayant une longueur moyenne (RSm) de 0,8 à 10 µm et une hauteur maximale de reliefs (Rz) de 0,2 à 5 µm, et
une force d'adhérence à ladite première pièce métallique et ledit autre substrat adhérent étant d'au moins 42 Ma, exprimée en résistance moyenne à la rupture par cisaillement.

2. Elément composite en alliage de magnésium, comportant :
une première pièce métallique, laquelle est en alliage de magnésium et a des reliefs à échelle micrométrique créés par attaque chimique, et dont la surface est couverte, si on l'observe par microscopie électronique, de microreliefs comprenant des empilements irréguliers de corps sphériques de 80 à 120 nm de diamètre et 20 à 200 nm de longueur sur lesquels se dressent d'innombrables saillies en forme de baguettes de 5 à 20 nm de diamètre et 10 à 30 nm de longueur, ou comprenant des irrégularités à période de 80 à 120 nm sur lesquelles se dressent d'innombrables saillies en forme de baguettes, ladite surface étant une fine couche d'oxyde de manganèse obtenue en plongeant ladite pièce en alliage de magnésium dans une solution aqueuse comprenant un sel sous forme de permanganate ; et
un autre substrat adhérent fixé en utilisant, comme adhésif, une colle époxy pénétrant dans lesdits microreliefs,
lesdits reliefs de surface à échelle micrométrique ayant une longueur moyenne (RSm) de 0,8 à 10 µm et une hauteur maximale de reliefs (Rz) de 0,2 à 5 µm, et
une force d'adhérence à ladite première pièce métallique et ledit autre substrat adhérent étant d'au moins 42 Mpa, exprimée en résistance moyenne à la rupture par cisaillement.

3. Elément composite en alliage de magnésium, comportant :
une première pièce métallique, laquelle est en alliage de magnésium et a des reliefs à échelle micrométrique créés par attaque chimique, et dont sensiblement toute la surface est couverte, si on l'observe par microscopie électronique, de microreliefs sous la forme d'un sol irrégulier d'un plateau de lave dans lequel sont empilés des granulés ou des corps en polyèdres irréguliers de 20 à 40 nm de diamètre, ladite surface étant une fine couche d'oxyde de manganèse obtenue en plongeant ladite pièce en alliage de magnésium dans une solution aqueuse comprenant un sel sous forme de permanganate ; et
un autre substrat adhérent fixé en utilisant, comme adhésif, une colle époxy pénétrant dans lesdits microreliefs,
lesdits reliefs de surface à échelle micrométrique ayant une longueur moyenne (RSm) de 0,8 à 10 µm et une hauteur maximale de reliefs (Rz) de 0,2 à 5 µm, et
une force d'adhérence à ladite première pièce métallique et ledit autre substrat adhérent étant d'au moins 42 Ma, exprimée en résistance moyenne à la rupture par cisaillement.

4. Elément composite en alliage de magnésium selon l'une quelconque des revendications 1 à 3,
dans laquelle ledit substrat adhérent est une seconde pièce métallique en alliage de magnésium sur laquelle sont formés lesdits microreliefs.

5. Elément composite en alliage de magnésium selon l'une quelconque des revendications 1 à 3,
dans laquelle ledit substrat adhérent est une matière plastique armée de fibres, comprenant ladite colle époxy et armée par apport et stratification d'un ou de plusieurs types de fibres choisi(s) parmi des fibres longues, des fibres courtes et des fibres tissées.

6. Elément composite en alliage de magnésium selon l'une quelconque des revendications 1 à 3,
dans laquelle ladite attaque chimique comprend une immersion dans une solution aqueuse acide, et un dernier traitement de surface consiste en un traitement par immersion dans une solution aqueuse d'un sel sous forme de permanganate.

7. Elément composite en alliage de magnésium selon l'une quelconque des revendications 1 à 3,
dans laquelle une résine d'un produit polymérisé de ladite colle époxy ne contient pas plus de 30 parties en poids d'un constituant élastomère par rapport à un total de 100 parties en poids de fraction de résine.

8. Elément composite en alliage de magnésium selon l'une quelconque des revendications 1 à 3,
dans laquelle un produit polymérisé de ladite colle époxy contient un total non supérieur à 100 parties en poids d'une charge par rapport à un total de 100 parties en poids de fraction de résine.

9. Elément composite en alliage de magnésium selon la revendication 8,
dans laquelle ladite charge consiste en un ou plusieurs types de fibres d'armature choisi(s) parmi les fibres de verre, les fibres de carbone et les fibres aramides, ou
un ou plusieurs types d'une charge en poudre choisi(s) parmi le carbonate de calcium, le carbonate de magnésium, la silice, le talc, l'argile et le verre.

10. Elément composite en alliage de magnésium selon la revendication 7,
dans laquelle ledit constituant élastomère a une granulométrie de 1 à 15 µm et consiste en un ou plusieurs types choisi(s) parmi la poudre de caoutchouc vulcanisé, le caoutchouc semi-réticulé, le caoutchouc non vulcanisé, une résine thermoplastique, à groupe terminal modifié, d'un poly(éthersulfone) à groupe terminal hydroxyle à point de fusion/point de ramollissement non inférieur à 300°C, et une résine polyoléfinique.

11. Procédé pour fabriquer un élément composite en alliage de magnésium, comportant :
une étape d'usinage consistant à façonner mécaniquement une pièce en alliage de magnésium à partir d'une pièce moulée ou d'un matériau intermédiaire ;
une étape d'attaque chimique consistant à plonger ladite pièce en alliage de magnésium façonnée dans une solution aqueuse acide ;
une étape de traitement de conversion consistant à plonger ladite pièce en alliage de magnésium dans une solution aqueuse comprenant un sel sous forme de permanganate ;
une étape d'enduction de parties requises de ladite pièce en alliage de magnésium avec une colle époxy;
une étape de formage consistant à doter des dimensions requises un préimprégné de matière plastique à armature de fibres ;
une étape de fixation consistant à fixer ledit préimprégné sur la surface enduite de ladite pièce en alliage de magnésium ; et
une étape de polymérisation consistant à polymériser toute la fraction de résine époxy en mettant en place, immobilisant et chauffant ledit préimprégné et ladite pièce en alliage de magnésium.

12. Procédé pour fabriquer un élément composite en alliage de magnésium, comportant :
une étape d'usinage consistant à façonner mécaniquement une pièce en alliage de magnésium à partir d'une pièce moulée ou d'un matériau intermédiaire ;
une étape d'attaque chimique consistant à plonger ladite pièce en alliage de magnésium façonnée dans une solution aqueuse acide ;
une étape de traitement de conversion consistant à plonger ladite pièce en alliage de magnésium dans une solution aqueuse comprenant un sel sous forme de permanganate, pour ainsi former des microreliefs sur la surface ;
une étape d'enduction desdits microreliefs de ladite pièce en alliage de magnésium avec une colle époxy;
une étape de prétraitement de polymérisation consistant à placer dans un récipient étanche à l'air ladite pièce en alliage de magnésium, qui a été enduite avec ladite colle époxy, dépressuriser le récipient, puis mettre le récipient sous pression pour ainsi pousser ladite colle époxy dans lesdits microreliefs de l'alliage de magnésium ;
une étape de formage consistant à doter des dimensions requises un préimprégné de matière plastique à armature de fibres ;
une étape de fixation consistant à fixer ledit préimprégné sur la surface enduite de ladite pièce en alliage de magnésium ; et
une étape de polymérisation consistant à polymériser toute la fraction de résine époxy en mettant en place, immobilisant et chauffant ledit préimprégné et ladite pièce en alliage de magnésium.

13. Procédé pour fabriquer un élément composite en alliage de magnésium selon la revendication 12 ou 13, dans lequel lesdits reliefs de la surface à l'échelle micrométrique ont une longueur moyenne (RSm) de 0,8 à 10 µm et une hauteur maximale de reliefs (Rz) de 0,2 à 5 µm.

14. Procédé pour fabriquer une pièce composite en alliage de magnésium selon l'une quelconque des revendications 12 à 14,
dans lequel ladite étape de traitement de conversion comprend une immersion dans une solution aqueuse faiblement acide de permanganate de potassium.

15. Procédé pour fabriquer un élément composite en alliage de magnésium selon l'une quelconque des revendications 12 à 14,
dans lequel une fraction de résine d'un produit polymérisé de ladite colle époxy ne contient pas plus de 30 parties en poids d'un constituant élastomère par rapport à un total de 100 parties en poids de fraction de résine.

16. Procédé pour fabriquer un élément composite en alliage de magnésium selon l'une quelconque des revendications 12 à 15,
dans lequel ledit produit polymérisé contient un total non supérieur à 100 parties en poids d'une charge par rapport à un total de 100 parties en poids de fraction de résine.

17. Procédé pour fabriquer un élément composite en alliage de magnésium selon la revendication 17,
dans lequel ladite charge consiste en un ou plusieurs types de fibres d'armature choisi(s) parmi les fibres de verre, les fibres de carbone et les fibres aramides, ou
un ou plusieurs types d'une charge en poudre choisi(s) parmi le carbonate de calcium, le carbonate de magnésium, la silice, le talc, l'argile et le verre.

18. Procédé pour fabriquer un élément composite en alliage de magnésium selon l'une quelconque des revendications 16 et 17,
dans lequel ledit constituant élastomère a une granulométrie de 1 à 15 µm et consiste en un ou plusieurs types choisi(s) parmi la poudre de caoutchouc vulcanisé, le caoutchouc semi-réticulé, le caoutchouc non vulcanisé, une résine thermoplastique, à groupe terminal modifié, d'un poly(éthersulfone) à groupe terminal hydroxyle à point de fusion/point de ramollissement non inférieur à 300°C, et une résine polyoléfinique.
